# EUROPÄISCHE PATENTSCHRIFT

(11) **EP 4 029 230 B1**
(45) Veröffentlichungstag und Bekanntmachung des Hinweises auf die Patenterteilung: **02.08.2023**
(21) Anmeldenummer: 20771835.4
(22) Anmeldetag: 11.09.2020
(51) Int. Cl.: H04M 1/19, H04M 1/03, H04M 1/05, H04R 1/08, H04R 1/10, G10K 11/16

(54) **BEGRENZEN VON SCHALLEMISSIONEN BEI SPRACHERFASSUNGSANORDNUNGEN**
LIMITATION OF SOUND EMISSIONS IN SPEECH CAPTURING ARRANGEMENTS
LIMITATION DES ÉMISSIONS SONORES DANS LES ARRANGEMENTS DE CAPTAGE DE LA PAROLE

(30) Priorität: 11.09.2019 DE 102019213894
(43) Veröffentlichungstag der Anmeldung: 20.07.2022
(73) Patentinhaber: mutum GmbH, 36167 Nüsttal (DE)
(72) Erfinder: ANVARI, Pouyan, 14469 Potsdam (DE); HARTUNG, Matthias, 36167 Nüsttal (DE); RANISCH, Christopher, 64295 Darmstadt (DE); RIEß, Sebastian, 64295 Darmstadt (DE); ATZRODT, Heiko, 64331 Weiterstadt (DE)
(74) Vertreter: Ramrath, Lukas
(86) Internationale Anmeldenummer: PCT/EP2020/075544
(87) Internationale Veröffentlichungsnummer: WO 2021/048404

(56) Entgegenhaltungen:
- US-A1- 2012 095 768
- US-A1- 2013 100 233
- US-A1- 2019 253 886
- US-B1- 9 614 945

## Beschreibung

Die Erfindung betrifft Lösungen zum Begrenzen von Schallemissionen und insbesondere Schallabstrahlungen in die Umgebung bei Anordnungen zur Spracherfassung.

Anordnungen zur Spracherfassung sind in verschiedenen Zusammenhängen bekannt, z.B. als Mobiltelefon oder Headset. Zur Spracherfassung werden Mikrofone verwendet, die in einem Spracherfassungsbereich der Anordnung positioniert sind.

Insbesondere sind Anordnungen zur Spracherfassung bekannt, die an einem Kopf tragbar sind, zum Beispiel über einen Tragbügel oder über Kopfhörer. Ein Beispiel einer solchen Anordnung ist ein Headset. Das Mikrofon und genauer gesagt der Spracherfassungsbereich wird in der Regel über eine Trägerstruktur, insbesondere einen langgestreckten Tragarm, nahe zu und insbesondere vor dem Mund des Benutzers positioniert. Der Tragarm erstreckt sich dabei in der Regel von einem Bereich nahe des Kopfes und insbesondere nahe eines Ohrs entlang des Gesichts des Benutzers (zum Beispiel entlang dessen Wange oder Kiefer) zu dessen Mund. An einem vorderen freien Ende des Tragarms kann der Spracherfassungsbereich ausgebildet sein.

Auch lediglich an den Kopf haltbare, dort aber nicht zwingend befestigtbare Anordnungen, bilden Spracherfassungsanordnungen im Sinne dieser Offenbarung, insbesondere in Form von Kommunikationsvorrichtungen, wie Mobilfunkgeräten. Auch derartige Anordnungen weisen bekanntermaßen einen Spracherfassungsbereich mit einem Mikrofon auf, um Sprachinformationen eines Benutzers aufzuzeichnen und/oder an entfernte Kommunikationspartner zu übertragen.

Wenn derartige Anordnungen von einer Person zur Spracherfassung benutzt werden, können sich andere Personen in der Umgebung gestört fühlen. Dies betrifft zum Beispiel das Anwenden von Mobilfunkgeräten in öffentlichen Räumen (zum Beispiel in der Bahn, in Restaurants oder auf öffentlichen Plätzen). Auch kann es aus Vertraulichkeitsgründen unerwünscht sein, dass Personen in der Umgebung eigene Spracheingaben insbesondere im Rahmen von Telefonaten mithören können. Oftmals versuchen Benutzer dann, mit ihren Händen eine Art Schallschutzstruktur um ihren Mund und/oder ein etwaiges Mobiltelefon auszubilden, was ineffektiv und wenig komfortabel ist.

Ebenso kann das Verwenden von Spracherfassungsanordnungen in Büroräumen andere Mitarbeiter stören. Beispielsweise ist es bekannt, dass in Callcentern eine Vielzahl von Mitarbeitern sich in räumlicher Nähe zueinander aufhalten und als Spracherfassungsanordnungen insbesondere vorstehend erläuterte Headsets benutzen. Ein Mitarbeiter kann durch die Telefonate der anderen Mitarbeiter abgelenkt werden oder diese Telefonate können von einem eigenen Headset als unerwünschte Hintergrundgeräusche miterfasst und übertragen werden. Oftmals wird daher versucht, Schallschutzstrukturen in der Umgebung der Mitarbeiter anzuordnen, zum Beispiel in Form von Schallschutzwänden. Diese Maßnahmen sind jedoch teuer und nicht immer effektiv.

Die US 2021/095768 A1 offenbart Systeme und Methoden zum Blockieren von Lippen einer sprechenden Person und insbesondere in Lippenblockiersystem mit schalldämpfenden oder -aufnehmenden Material.

Die US 2019/253886 A1 offenbart einen Sichtschutz mit schallabsorbierendem Material. Die US 9,614,945 B1 offenbart eine Vorrichtung zum Erhalten der Privatsphäre einer Kommunikation, wobei Schall während der Benutzung der Vorrichtung gefangen und/oder absorbiert werden kann.

Die US 2013/100233 A1 offenbart ein schallfokusierendes System.

Aufgabe der vorliegenden Erfindung ist es daher, die Benutzung von Spracherfassungsanordnungen insbesondere hinsichtlich unerwünschter Schallemissionen in die Umgebung zu verbessern.

Diese Aufgabe wird durch den Gegenstand des beigefügten unabhängigen Anspruchs gelöst. Vorteilhafte Weiterbildungen sind in den abhängigen Ansprüchen angegeben. Es versteht sich, dass die in der einleitenden Beschreibung erwähnten Merkmale einzeln oder in beliebiger Kombination auch bei der vorliegend offenbarten Lösung vorgesehen sein können, sofern nicht anders angegeben oder ersichtlich.

Allgemein wird vorgeschlagen eine Schalldämpferanordnung bereitzustellen, die dazu eingerichtet ist, Schallemissionen in die Umgebung zu begrenzen. Insbesondere soll nach wie vor ermöglicht werden, dass die Sprache mittels eines Mikrofons erfasst wird. Das Mikrofon bzw. ein das Mikrofon umfassender Spracherfassungsbereich kann also zumindest teilweise unverdeckt sein, insbesondere an einer Vorderseite, die dem Mund eines Benutzers zugewandt ist. Gegenüber der Umgebung kann aber das Mikrofon insbesondere an einer Rückseite, die vom Mund des Benutzers abgewandt ist, von der Schalldämpferanordnung abgeschirmt werden.

Aus Sicht des Benutzers kann also das Mikrofon zwischen dem Mund des Benutzers und der Schalldämpferanordnung positioniert sein, beispielsweise zumindest dann, wenn es sich bei der Spracherfassungsanordnung gemäß bevorzugter Ausführungsformen um eine am bzw. vom Kopf tragbare Anordnung wie zum Beispiel ein Headset handelt.

Es kann aber ebenso möglich sein, dass das Mikrofon und/oder der Spracherfassungsbereich aus Sicht des Benutzers neben, oberhalb und/oder seitlich vom Mund positioniert ist, beispielsweise zumindest dann, wenn es sich bei der Spracherfassungsanordnung gemäß bevorzugter Ausführungsformen um eine Kommunikationsvorrichtung wie ein Mobiltelefon handelt. Dann kann dennoch der Mund des Benutzers von der Schalldämpferanordnung zumindest teilweise überdeckt oder abgeschirmt werden, beispielsweise da sich die Schalldämpferanordnung bis vor den Mund des Benutzers erstreckt. Ein Freiraum zwischen dem Mund und dem Spracherfassungsbereich kann aber durch die Schalldämpferanordnung freigelassen werden, sodass dennoch Sprachinformationen des Benutzers bzw. von diesem erzeugte Schallwellen zumindest anteilig ohne Wechselwirkung mit der Schalldämpferanordnung zu dem Spracherfassungsbereich gelangen können.

Allgemein kann vorgesehen sein, dass die Schalldämpferanordnung an bestehenden Spracherfassungsanordnungen nachrüstbar ist, zum Beispiel durch manuelles und bevorzugt werkzeugloses Anbringen daran. Bevorzugt wird dabei ein Aufstecken, Anklipsen oder allgemeines Herstellen einer kraft- und/oder formschlüssigen Verbindung (insbesondere einer Rastverbindung) zum Anbringen der Schalldämpferanordnung.

Zusätzlich oder alternativ kann die Schalldämpferanordnung (zum Beispiel nach einem nachträglichen Anbringen) relativ zu anderen Elementen der Spracherfassungsanordnung und insbesondere zum Spracherfassungsbereich verlagerbar sein. Dies kann eine Möglichkeit zum manuellen Ausrichten beispielsweise durch Verdrehen der Schalldämpferanordnung umfassen.

Zusätzlich oder alternativ kann die Schalldämpferanordnung insbesondere im Rahmen nachstehend erläuterter erster und zweiter Betriebszustände unterschiedlich relativ zu dem Spracherfassungsbereich und/oder einem Mund des Benutzers anordenbar sein. Hierzu kann die Schalldämpferanordnung zwischen verschiedenen Stellungen hin und her bewegt werden, beispielsweise durch selektives Ausschieben und Einschieben oder durch selektives Herausklappen und Einklappen.

Allgemein kann die Schalldämpferanordnung flächig ausgebildet sein und insbesondere als ein Schirm oder ein Panel.

Es wird eine Anordnung zur Spracherfassung (Spracherfassungsanordnung) beschrieben, die (zum Beispiel dauerhaft mittels Trägerbügeln oder durch temporäres Halten per Hand) an oder nahe des Kopfes einer sprechenden Person (d. h. eines Benutzers der Anordnung) positionierbar ist, mit:
- einer Innenseite und einer Außenseite;
- einem ein Mikrofon umfassenden Spracherfassungsbereich, der zumindest abschnittsweise der Innenseite zugewandt ist oder diese bildet; und
- einer Schalldämpferanordnung, die zumindest teilweise einer Außenseite der Anordnung zugewandt ist oder diese bildet.

Bevorzugt weist die Schalldämpferanordnung eine Vorderseite, eine Rückseite und eine Schalldämpferstruktur auf, die sich zumindest teilweise zwischen der Vorderseite und der Rückseite erstreckt. Dies schließt nicht aus, dass die Schalldämpferstruktur zumindest eine von Vorderseite und Rückseite zumindest abschnittsweise bildet (d. h. einstückig hiermit ausgebildet ist). Es kann dann aber vorgesehen sein, dass sich ein weiterer Abschnitt (zum Beispiel in einer Tiefendimension) der Schalldämpferstruktur zwischen dieser Vorderseite und Rückseite befindet. Anders ausgedrückt kann also die Schalldämpferstruktur zunächst abschnittsweise zwischen der Vorderseite und Rückseite eingeschlossen sein und/oder eine schalldämpfende Lage hierzwischen bilden.

Es wird eine Anordnung zur Spracherfassung vorgeschlagen, die an oder nahe des Kopfes einer sprechenden Person positionierbar ist, mit:
- einem ein Mikrofon umfassenden Spracherfassungsbereich; und
- einer Schalldämpferanordnung, die zumindest teilweise einer Außenseite der Anordnung zugewandt ist oder diese bildet;
wobei die Schalldämpferanordnung vor dem Mund eines Benutzers positionierbar ist und zwar derart,
- dass der Spracherfassungsbereich zumindest teilweise zwischen der Schalldämpferanordnung und dem Mund angeordnet ist (zum Beispiel bei einer Positionierung des Spracherfassungsbereichs unmittelbar vor dem Mund);
- und/oder (zum Beispiel bei einer Positionierung des Spracherfassungsbereichs neben, oberhalb oder seitlich vom Mund) dass ein Freiraum zwischen Mund und Spracherfassungsbereich durch die Schalldämpferanordnung zumindest teilweise unverdeckt oder, mit anderen Worten, unversperrt ist, beispielsweise da sich die Schalldämpferanordnung nicht in diesen Freiraum hinein erstreckt. Wie nachstehend erläutert, kann der Freiraum länglich sein und/oder sich entlang einer Wange des Benutzers zwischen der Schalldämpferanordnung und dem Spracherfassungsbereich erstrecken.

Beide dieser Anordnungen sind mit sämtlichen nachstehenden Erläuterungen, Merkmalen und Weiterbildungen kombinierbar.

Hierin getätigte Bezugnahmen im Sinne von oben, unten, neben etc. können sich auf eine aufrecht stehende oder aufrecht sitzende Person richten und insbesondere auf deren Kopfhaltung, wenn diese die Anordnung benutzt. Allgemein kann jegliche hierin erläuterte Anordnung in Kontakt mit dem Kopf der Person bringbar sein oder für eine ordnungsgemäße Benutzung einen solchen Kontakt vorsehen.

Allgemein kann hierin auf einen Benutzungszustand der Anordnung abgestellt werden, der einem beabsichtigten Benutzungszustand entspricht, bei dem beispielsweise die Anordnung in natürlicher Weise (und zum Beispiel mit dem besten Tragekomfort) an dem Kopf positioniert ist und/oder eine Spracherfassung mit einer höchstmöglichen Qualität (und insbesondere einer höchstmöglichen Amplitude oder über einen größtmöglichen Frequenzbereich) gelingt, ohne dass anderweitige Funktionen (zum Beispiel eine Akustikausgabefunktion) beeinträchtigt werden. Letzteres kann beispielsweise dann der Fall sein, wenn ein Freiraum zwischen einem Mund des Benutzers und dem Erfassungsbereich bestehen bleibt, gleichzeitig aber auch ein Akustikausgabebereich (ein Lautsprecher) nahe eines Ohrs des Benutzers positioniert wird.

Die Innenseite kann allgemein einem Mund des Benutzers zugewandt und/oder von der Umgebung abgewandt sein. Die Außenseite kann von dem Mund des Benutzers abgewandt und/oder der Umgebung zugewandt sein. Der Spracherfassungsbereich kann seitlich von, neben oder gegenüberliegend von dem Mund des Benutzers positionierbar sein.

Wie erwähnt, kann der Spracherfassungsbereich gemäß einer Variante eine vor dem Mund eines Benutzers positionierbarer Abschnitt eines Headsets sein. Insbesondere kann der Spracherfassungsbereich an einem freien Ende einer Trägerstruktur (oder auch eines Trägerarms oder Trägerbügels) positioniert sein oder dieses Ende bilden.

Alternativ kann der Spracherfassungsbereich in einem Gehäuse der Anordnung aufgenommen sein, insbesondere wenn es sich bei der Spracherfassungsanordnung um eine Kommunikationsvorrichtung wie ein Mobiltelefon handelt. Dann befindet sich der Spracherfassungsbereich bevorzugt an einer Unterseite der Kommunikationsvorrichtung und/oder des Gehäuses. An einer gegenüberliegenden Oberseite kann hingegen der nachfolgend erläuterte Akustikausgabereich positioniert sein, der zum Beispiel einen Lautsprecher umfassen kann.

Neben dem Mikrofon kann der Spracherfassungsbereich optional akustisch durchlässige Hüllen, Körper, Wände oder anderweitige Strukturen umfassen, welche jeweils einem Schutz des Mikrofons dienen können.

Allgemein kann der Spracherfassungsbereich derart gestaltet sein, dass er Schallwellen, die von einem sprechenden Benutzer erzeugt werden, zu dem Mikrofon hindurchlässt (d. h. allgemein akustisch durchlässig ist). Andererseits kann der Spracherfassungsbereich das Mikrofon vor unerwünschten Umwelteinflüssen, wie zum Beispiel Verschmutzungen oder Luftströmungen, schützen. Insbesondere kann der Spracherfassungsbereich, das Mikrofon zumindest anteilig von der Umwelt abschirmen, aber aufgrund einer Perforation oder anderweitigen strukturellen Merkmalen (zum Beispiel Ausnehmungen) durchlässig für Schallwellen sein.

Von einer Durchlässigkeit für Schallwellen kann dann gesprochen werden, wenn etwaige Abschwächungen oder anderweitige Beeinflussungen der Schallwellen sich nicht signifikant auf ein Erfassungsergebnis durch das Mikrofon auswirken oder unterhalb vorbestimmter akzeptabler Grenzwerte liegen. Eine ausreichende Durchlässigkeit kann insbesondere dann angenommen werden, wenn eine luftleitende Verbindung zwischen dem Mikrofon und der Umgebung durch den Spracherfassungsbereich hindurch ermöglicht wird (zum Beispiel durch eine dortige Perforation oder dortige Ausnehmungen).

Bevorzugt ist der Spracherfassungsbereich an der Innenseite der Anordnung unverdeckt oder bildet einen unverdeckten Abschnitt dieser Innenseite. Gegenüberliegend von dieser Innenseite kann der Spracherfassungsbereich jedoch zumindest teilweise von der Schalldämpferanordnung verdeckt sein, hiervon gegenüber der Umgebung abgeschirmt werden und/oder sich hiermit überlappen. Dies begrenzt das Übertreten akustischer Wellen in die Umgebung, welche nicht mit dem Spracherfassungsbereich wechselwirken bzw. von diesem absorbiert werden. Eine derartige Relativanordnung von Spracherfassungsbereich und Schalldämpferanordnung kann insbesondere bei Headsets vorgesehen sein oder allgemein bei am (bzw. vom) Kopf tragbaren Spracherfassungsanordnungen.

Es kann aber auch vorgesehen sein, dass insbesondere dann, wenn der Spracherfassungsbereich in einem Gehäuse (von zum Beispiel einem Mobiltelefon) angeordnet ist, dieser sozusagen rückseitig zumindest nicht unmittelbar mit der Schalldämpferanordnung überlappt oder hiervon abgeschirmt wird. Insbesondere kann dann zumindest ein Teil des Gehäuses zwischen dem Spracherfassungsbereich in der Schalldämpferanordnung positioniert sein, sodass Letztere zumindest nicht unmittelbar mit dem Spracherfassungsbereich überlappt und/oder diesen zumindest nicht unmittelbar rückseitig verdeckt oder abschirmt. Insbesondere kann in diesem Fall der Spracherfassungsbereich nicht unmittelbar vor dem Mund eines Benutzers, sondern zum Beispiel seitlich hiervon nahe dessen Wange positioniert sein. Die Schalldämpferanordnung kann sich (beispielsweise ausgehend von dem erwähnten Gehäuse) bis zu und bevorzugt auch zumindest abschnittsweise vor den Mund des Benutzers erstrecken. Es kann auf diese Weise verhindert werden, dass vom Benutzer erzeugte Schallwellen ungedämpft in die Umgebung gelangen. Gleichzeitig verbleibt aber ein Freiraum zwischen der Schalldämpferanordnung und dem Gehäuse und/oder dem Spracherfassungsbereich, durch den die Schallwellen ohne direkte schalldämpfende Wechselwirkung mit der Schalldämpferanordnung zu dem Spracherfassungsbereich gelangen können (zum Beispiel ohne hierfür auf die Schalldämpferanordnung zu treffen oder durch diesen hindurch laufen zu müssen).

Die Schalldämpferanordnung und insbesondere deren Schalldämpferstruktur kann eine schalldämpfende Wirkung bereitstellen, welche insbesondere auf die Art des verwendeten Materials oder aber eine bestimmte Schalldämpferstruktur zurückzuführen ist. Letztere kann sich nicht auf die mikroskopische Struktur des Materials selbst beziehen, sondern auf eine makroskopische durch das Material geformte Struktur. Beispielsweise kann die Schalldämpferstruktur Ausnehmungen, Öffnungen, Kanäle, Durchbrechungen, Wände, Hohlräume oder dergleichen umfassen, welche gesondert hergestellt und nicht auf inhärente Materialeigenschaften zurückzuführen sind.

Die Schalldämpferstruktur kann mittels generativer oder additiver Herstellungsverfahren (insbesondere 3D-Druck) hergestellt werden. Beispiele additiver Herstellungsverfahren finden sich in der folgenden Richtlinie: VDI 3405, Herausgegeben von VDI-Gesellschaft Produktion und Logistik, Dezember 2014.

Die Schalldämpferanordnung und insbesondere Schalldämpferstruktur können gegenüber anderweitigen Materialien der Anordnung eine erhöhte Schalldämpfungswirkung bereitstellen. Allgemein können sie dazu eingerichtet sein, eine Schalldämpfung (also eine Dämpfung des in die Umgebung abgestrahlten Sprachschalls) um mehrere Dezibel und/oder um wenigstens 30 % und vorzugsweise wenigstens 50 % gegenüber dem ungedämpft Fall (d.h. bei Abwesenheit der Schalldämpferanordnung) zu ermöglichen. Die vorstehenden Zahlenwerte können dabei bezogen auf ein erwartetes Frequenzspektrum der menschlichen Sprache gelten.

Eine weitere Ausführungsform sieht vor, dass die Schalldämpferanordnung flächig ausgebildet ist. Hierunter kann verstanden werden, dass die Schalldämpferanordnung eine Dickenabmessung aufweist, welche wenigstens zwei weitere Abmessungen (oder Dimensionen) der Schalldämpferanordnung, die eine Fläche aufspannen oder beschreiben, deutlich unterschreitet und vorzugsweise nicht mehr als 50 % und bevorzugt nicht mehr als 10 % dieser weiteren Abmessungen aufweist. Die weiteren Abmessungen können eine Längen- und eine Breitenabmessung sein. Sie können in orthogonal zueinander stehenden Richtungen gemessen werden.

Die Dicke kann in einer orthogonal zur Fläche der Schalldämpferanordnung (und/oder orthogonal zu deren Rückseite oder Vorderseite) verlaufenden Richtung gemessen werden. Allgemein kann die Dicke dem Abstand der Vorder- und Rückseite entsprechen. Sie kann durch eine Dicke der Schalldämpferstruktur zumindest anteilig festgelegt werden oder dieser Dicke entsprechen.

Es ist nicht ausgeschlossen, dass die flächige Schalldämpferanordnung gewölbt ist, insbesondere derart, dass eine dem Mund des Benutzers zugewandte Rückseite der Schalldämpferanordnung konvex gewölbt ist und/oder eine vom Mund abgewandte Vorderseite konkav gewölbt. Auch die vorstehend erwähnten Abmessungen können dann gewölbt sein und sich entsprechend gewölbt entlang der Vorderseite und Rückseite erstrecken.

Auch die Schalldämpferstruktur kann entsprechend flächig sein und jegliche der vorstehenden optionalen Merkmale hinsichtlich der Abmessungsverhältnisse (insbesondere der Dickenabmessung) oder einer etwaigen Wölbung aufweisen.

Die Fläche der Schalldämpferanordnung kann derart ausgerichtet oder ausrichtbar sein, dass sie sich im Wesentlichen längs und/oder parallel zu einem Gesicht des Benutzers und insbesondere dessen Mund erstreckt. Bei einer aufrecht stehenden Person mit gerader Kopfhaltung kann die Schalldämpferanordnung also im Wesentlich hochkant stehen und/oder eine vertikale Fläche definieren.

Allgemein kann durch das flächige Ausbilden der Schalldämpferanordnung eine zuverlässige akustische Abschirmwirkung bereitgestellt werden.

Zusätzlich oder alternativ kann die Schalldämpferanordnung fächerartig ausgebildet sein und mehrere einzelne Fächerelemente umfassen, die relativ zueinander verlagebar sind. Insbesondere können diese entlang einer gebogenen Achse bewegt werden bzw. um eine gemeinsame Rotationsachse rotiert werden. Die einzelnen Fächerelemente selbst können gebogen sein. Insgesamt kann somit eine schalen- oder schüsselartige Struktur geschaffen werden, insbesondere eine halbschalenförmige Struktur, in die ein Benutzer hineinsprechen kann.

Gemäß einer Weiterbildung weist die Schalldämpferanordnung eine Länge von wenigstens 5 cm und vorzugweise wenigstens 10 cm auf. Bei der Längenabmessung kann es sich um die Abmessung entlang einer Längsachse handeln und/oder eine Abmessung in der Fläche einer bevorzugt flächigen Schalldämpferanordnung. Die Länge kann sich horizontal erstrecken und/oder von links nach rechts entlang des Munds eines Benutzers (z.B. bei Headsets). Insbesondere kann sich die Länge ausgehend von dem Spracherfassungsbereich in Richtung des Mundes erstrecken (z.B. bei Mobiltelefonen). Es hat sich gezeigt, dass mit einer derartigen Länge in vielen Anwendungen ein geeignetes Abschirmen von insbesondere dem Mund eines Benutzers möglich ist.

Eine maximale Länge kann hingegen 30 cm oder bevorzugt 20 cm nicht überschreiten. Es hat sich gezeigt, dass dann eine besonders effektive Abstimmung gelingt, gleichzeitig aber noch eine ausreichend komfortable Handhabbarkeit und insbesondere eine etwaige manuelle Verlagerbarkeit der Schalldämpferanordnung gewährleistet ist.

Wie erwähnt, kann die Schalldämpferanordnung zumindest abschnittsweise vor dem Mund eines Nutzers positionierbar sein. Hierfür kann sie geeignet dimensioniert und/oder innerhalb der Anordnung geeignet positioniert, geeignet verlagerbar und/oder geeignet ausrichtbar sein.

Ein weiterer Aspekt sieht vor, dass die Schalldämpferstruktur eine andere Struktur und/oder ein anderes Material als wenigstens eine von Vorderseite und Rückseite aufweist. Die Schalldämpferstruktur kann also als eine gesonderte Struktur- oder Materiallage zwischen der Vorderseite und der Rückseite angeordnet sein. Dies ermöglicht eine kompakte Struktur und gegebenenfalls auch einen Schutz der Schalldämpferstruktur durch die Vorder- und Rückseite vor Umwelteinflüssen (insbesondere Verschmutzungen).

Allgemein kann vorgesehen sein, dass die Vorderseite akustisch durchlässig ist. Bevorzugt ist sie aber zumindest anteilig und besonders bevorzugt größtenteils geschlossen, beispielsweise da sie eine entsprechend kleindimensionierte Perforierung aufweist. Auf diese Weise kann die Vorderseite leicht gereinigt werden und insbesondere zwecks Desinfizierung abwischbar sein oder allgemein in Kontakt mit Flüssigkeiten gebracht werden, gleichzeitig aber auch die Schalldämpferstruktur schützen.

Die Rückseite ist hingegen bevorzugt geschlossen und/oder eben. Sie kann offenporig sein (zum Beispiel ein Schaumstoffmaterial umfassen), weist aber bevorzugt keine Vielzahl von Ausnehmungen, Öffnungen oder Durchbrechungen auf, insbesondere nicht in mittigen Bereichen, welche einem Mund des Benutzers gegenüberliegen. Hierdurch kann eine großflächige strukturelle Unterstützung der Schalldämpferstruktur bereitgestellt werden und/oder kann die Schalldämpfwirkung verbessert werden.

Eine Ausführungsform sieht vor, dass die Schalldämpferanordnung dazu eingerichtet (z.B. entsprechend geformt und/oder gewölbt) ist, von der Person erzeugte Sprachschallwellen zumindest teilweise in einem vorbestimmten Bereich zu bündeln. Diese Variante ist insbesondere für Headsets geeignet.

Das Bündeln kann dadurch erreicht werden, dass die Schalldämpferanordnung die Spracheschallwellen entsprechend reflektiert, d. h. per Reflexion derart ausrichtet, dass diese gebündelt in dem Bereich zusammentreffen. Hierfür kann die Schalldämpferanordnung und insbesondere eine der Person zugewandten Seite hiervon zum Beispiel geeignet geformt, gewinkelt oder gewölbt sein. Allgemein kann die Schalldämpferanordnung hierfür konkav gewölbt sein und somit an die Gesichtskonturen der Person angepasst sein. Dabei ist bevorzugt, wenn die Schalldämpferanordnung gegenüberliegend vom Mund positionierbar ist und sich auch darüber hinaus zum Beispiel in Richtung der Wangen der Person erstreckt. Insbesondere kann die Schalldämpferanordnung nach Art eines Parabolspiegels geformt sein.

In dem Bereich der Bündelung kann der Spracherfassungsbereich positioniert sein. Anders ausgedrückt können also per Bündelung die Sprachschallwellen im Spracherfassungsbereich gebündelt werden. Neben einer zuverlässigen Abschirmung der Umgebung vom Sprachschall wird dadurch auch eine verbesserte Erfassung des Sprachschalls durch ein Mikrofon des Spracherfassungsbereichs erzielt.

Optional kann das Mikrofon mit einer Zusatzschalldämpferanordnung vom Nutzer abgeschirmt sein und dadurch maßgeblich die gebündelten bzw. reflektierten Schallwellen erfassen. Dies wird nachstehend anhand der Figuren erläutert.

Nachstehend werden verschiedene Strukturmerkmale der Schalldämpferanordnung und insbesondere der Schalldämpferstruktur beschrieben, die eine akustische Dämpfung des Sprachschalls bewirken können. Diese können unabhängig von der Form der Schalldämpferanordnung sein bzw. wirken, aber selbstverständlich mit jeglichen hierin geschilderten Formvarianten der Schalldämpferanordnung kombiniert werden (z.B. mit obiger bündelnder Form nach Art eines Parabolspiegels). Die Strukturmerkmale können in einer gemeinsamen Materialschicht oder einem gemeinsamen Element ausgebildet sein, insbesondere innerhalb der bevorzugt einstückigen Schalldämpferstruktur. Sie können allgemein der Person zugewandt sein, aber auch an einer hiervon abgewandten Seite ausgebildet sein. Dies kann eine Ausbreitung von von der Schalldämpferanordnung ausgehendem Körperschall in die Umgebung reduzieren.

Die Strukturelemente können z.B. per 3D-Druck oder Spritzguss erzeugt werden. Sie können Abmessungen im Millimeterbereich oder Mikrometerbereich aufweisen. Bevorzugt ist eine maximale Abmessung der Strukturelemente jeweils nicht größer als 5 mm oder z.B. im Fall von Fasern oder Haaren nicht größer als 20 mm.

Die Strukturmerkmale können z.B. per Simulation oder experimentell für eine Schalldämpfung in einem definierten Frequenzbereich ausgelegt sein (z.B. durch entsprechendes Dimensionieren, Ausrichten oder Positionieren). Hierunter kann verstanden werden, dass sie in dem definierten (Schall-) Frequenzbereich eine gewünschte akustische Mindestdämpfung erreichen oder überschreiten.
Wie nachstehenden noch erläutert, können gleichartige oder verschiedenartige Strukturmerkmale auch miteinander kombiniert werden (d.h. gemeinsam innerhalb einer Schalldämpferanordnung vorgesehen sein), wobei diese dann bevorzugt zum Dämpfen von Sprachschall in unterschiedlichen Frequenzbereichen ausgelegt sind. Hierdurch kann ein breitbandiges akustischen Dämpfungsverhalten erzielt werden.

Eine bevorzugte Kombination umfasst eine unebene Oberfläche kombiniert mit Ausnehmungen und/oder Vertiefungen, beispielsweise zum Ausbilden nachstehender Helmhotzresonatoren oder entlang ihres Verlaufs bevorzugt mehrfach gewinkelter Kanäle. Zusätzlich können an der Oberfläche zumindest bereichsweise faserartige oder haarförmige Strukturen vorgesehen sein, d.h. kann die Oberfläche eine faserige oder haarige Textur aufweisen. Eine solche Kombination hat sich als vorteilhaft für das Erzielen einer breitbandigen Schalldämpfung erwiesen.

Gemäß einem bevorzugten Aspekt weist die Schalldämpferanordnung (als ein beispielhaftes Strukturmerkmal) einen Bereich mit einer unebenen Oberfläche auf. Dieser Bereich ist bevorzugt der Person zugewandt. Der Bereich weist bevorzugt eine Fläche von wenigstens 50 cm² und ferner bevorzugt von wenigstens 100 cm² auf. Sie kann unabhängig von und/oder zusätzlich zu einer Wölbung der Schalldämpferanordnung vorgesehen Die Unebenheiten kann Höhenunterschiede im Millimeterbereich umfassen, also beispielsweise einen Höhenunterschied von bis zu 5 mm oder bis zu 1 mm.

Allgemein kann die Unebenheiten durch Höhenvariationen der Oberfläche des Bereiches bereitgestellt werden und/oder durch ein schwankendes Höhenprofil der Oberfläche. Dies kann z. B. dadurch erzielt werden, dass Bereiche mit variierenden Flächen und Höhen zum Ausbilden der Oberfläche nebeneinander positioniert werden. Beispielsweise können die Flächen und/oder Höhen dieser Bereiche stochastisch verteilt sein.

Bei dem unebenen Bereich kann es sich um die Vorderseite der Schalldämpferanordnung handeln. Insbesondere kann die Schalldämpferstruktur einen entsprechenden Bereich aufweisen bzw. diesen bilden. Die Unebenheit kann mittels wenigstens einer der folgenden Varianten bereitgestellt werden: einer gewellten Oberfläche, einer gezackten oder geriffelten Oberfläche (bspw. zick-zack-förmigen Höhenprofil der Oberfläche), einer Oberflächenstruktur mit einer Rauheit oberhalb eines Mindestmaßes und insbesondere ohne glatte Bereiche oder Linien oberhalb einer zulässigen Länge (von beispielsweise nicht mehr als 5 mm oder nicht mehr als 1 mm).

Durch das Vorsehen einer unebenen Oberfläche können von der Person ausgehende Sprachschallwellen diffus reflektiert werden und sich somit zumindest teilweise schallmindernd gegenseitig auslöschen.

Die Unebenheiten der Oberfläche kann auch dadurch erzielt werden, dass diese (und insbesondere die Schalldämpferstruktur als solches) porös ist oder eine faserige (oder auch faserbehaftete) oder haarige Oberfläche aufweist. Insbesondere kann eine entsprechend poröse oder faserige Materialschicht vorgesehen sein, zum Beispiel in Form einer Dämmmatte. Hierüber können Absorptionseffekte erzielt werden, d. h. kann die Schallenergie zumindest teilweise in Wärmeenergie umgewandelt werden.

Gemäß einer bevorzugten Variante weist die Schalldämpferanordnung und insbesondere deren Schalldämpferstruktur (als ein weiteres beispielhaftes Strukturmerkmal) Helmholtzresonatoren auf. Diese können als Vertiefungen und/oder Ausnehmungen ausgebildet sein, beispielsweise in einem der Person zugewandten Bereich der Schalldämpferanordnung bzw. Schalldämpferstruktur. In bekannter Art und Weise können diese Vertiefungen und/oder Ausnehmungen zum Ausbilden von Helmholtzresonatoren einen Einlassbereich aufweisen, der gegenüber stromabwärts liegenden Bereichen verringerte Querschnittsabmessungen aufweist. Mit andere Worten können die Vertiefungen und/oder Ausnehmungen kammerartig ein Volumen begrenzen, das über einen zylindrischen Einlassabschnitt mit reduziertem Volumen oder Querschnitt mit der Umgebung verbunden ist.

Als ein weiteres optionales Strukturmerkmal kann die Schalldämpferanordnung einen Hohlkammerabschnitt und insbesondere eine hohlkammerartige Schicht oder Lage aufweisen. Der Hohlkammerabschnitt kann mit einem Edelgas gefüllt sein und/oder sich flächig innerhalb der Schalldämpferanordnung erstrecken. Er kann eine Grundfläche aufweisen, die wenigstens 50 % der Grundfläche der Schalldämpferanordnung entspricht. Hierdurch kann eine Schalltransmission durch die Schalldämpferanordnung hindurch verringert werden.

Zusätzlich oder alternativ kann die Schalldämpferanordnung und insbesondere die Schalldämpferstruktur (als ein weiteres beispielhaftes Strukturmerkmal) Absorberkeile aufweisen. Diese können einen Spezialfall einer vorstehend erläuterten unebenen Oberfläche darstellen. Ein Absorberkeil kann als ein keilförmiger Vorsprung ausgebildet sein. Bevorzugt wird eine Vielzahl solcher Absorberkeile nebeneinander und insbesondere aneinander anschließend (also ohne signifikante Abstände von Fußebereichen der Keile) angeordnet. Insbesondere können die Absorberkeil einstückig miteinander ausgebildet oder verbunden sein, also beispielsweise als Vorsprünge in einer gemeinsamen Materialschicht ausgebildet sein. Die Absorberkeile. Dabei können die Keile auch verschiedenartig zueinander orientiert und insbesondere relativ zueinander verdreht sein (z.B. um eine orthogonal zu einer gemeinsamen Grundfläche oder Grundebene der Schalldämpferanordnung verlaufende Rotationsachse).

Gemäß einer Weiterbildung weist die Schalldämpferanordnung Kanäle mit einem (bevorzugt mehrfach) gewinkelten Verlauf auf. Die Kanäle können als luftleitend mit der Umgebung verbundene Freiräume ausgebildet sein. Es kann, muss sich aber nicht, um langgestreckte Kanäle mit gegenüber der Länge deutlich reduzierter Querschnittsabmessung handeln. Der gewinkelte Verlauf kann darin resultieren, dass die Kanäle labyrinthartig oder schneckenartig sind oder allgemein mehrfache Richtungswechsel aufweisen. Hierdurch wird eine Länge der Kanäle bei gegebenenfalls reduziertem Raumbedarf erhöht, wodurch auch der Schallweg schalldämpfend verlängert wird.

Die Kanäle können zumindest abschnittsweise unausgefüllt sein. Sie können aber ebenso zumindest abschnittsweise gefüllt sein, beispielsweise mit einem porösen Dämmmaterial und/oder einem verfestigten Schaum.

Ein Zugang zu den Kanälen kann über schlitzartige Öffnungen erfolgen. Insbesondere können langgestreckte schlitzartige Öffnungsbereiche vorgesehen sein, entlang derer mehrere Kanäle der vorstehenden Art aneinandergereiht sind und/oder in die mehrere entsprechende Kanäle münden.

Erfindungsgemäß weist die Schalldämpferanordnung und insbesondere die Schalldämpferstruktur wenigstens einen vibroakustischen Bereich auf. Hierbei kann es sich um einen Bereich handeln, der durch Sprachschall zu Schwingungen angeregt wird, was schallabsorbierend wirkt. Der Bereich kann eine Vielzahl vibroakustischer Elemente aufweisen. Diese können zum Beispiel vorsprungartig an einer der Person zugewandten Seite ausgebildet sein. Die vibroakustischen Elemente können ein Feder-Masse-System bilden, dass durch Sprachschall zu Schwingungen anregbar ist.

Eine Weiterbildung sieht vor, dass der vibroakustische Bereich eine Mehrzahl von vibroakustischen Elementen aufweist. Vorzugsweise sind die vibroakustischen Elemente jeweils im Bereich eines Helmholtzresonators gemäß dem vorangehenden Aspekt oder eines Kanals gemäß dem vorangehenden Aspekt positioniert (oder allgemein im Bereich einer Öffnung oder Vertiefung). Insbesondere können vibroakustische Elemente jeweils einem Helmholtzresonator bzw. Kanal örtlich zugeordnet sein. Aus Sicht des Nutzers können sich die vibroakustische Elemente beispielsweise zumindest abschnittsweise oberhalb eines Helmholtzresonators bzw. Kanals befinden, also mit diesem überlappen. Bevorzugt sind die vibroakustischen Elemente und Helmholtzresonatoren bzw. Kanäle zum Schallmindern unterschiedlicher Frequenzbereiche ausgelegt. Die vibroakustischen Elemente können dann als eine Art schallmindernde Vorfilterstruktur dienen, wobei der verbleibende Schallanteil von den Helmholtzresonatoren bzw. Kanäle gedämpft werden kann.

Gemäß einer weiteren Variante umfasst die Schalldämpferanordnung wenigstens eine mechanisch mit der Schalldämpferstruktur verbundene Materiallage, wobei ein Gewicht der Materiallage höher als das Gewicht der Schalldämpferstruktur ist. Hierdurch können mechanische Schwingungen bei Anregung durch Sprachschall verringert werden, was zum Beispiel vorteilhaft zum Begrenzen einer etwaigen Körperschallübertragung durch die Schalldämpferanordnung ist.

Bei einer Weiterbildung umfasst die Schalldämpferstruktur (als ein weiteres beispielhaftes Strukturmerkmal) ein Metamaterial oder besteht hieraus. Das Metamaterial kann durch ein additives Herstellungsverfahren der vorstehend genannten Art hergestellt werden, insbesondere durch 3D-Druck. Allgemein kann unter einem Metamaterial ein künstlich hergestelltes Material verstanden werden, dessen Eigenschaften und insbesondere Struktur in der Natur nicht vorkommen. Es kann also eine künstliche Struktur geschaffen werden, die zum Erhalten gewünschte physikalischer Eigenschaften gezielt angepasst ist. Insbesondere können sich das Metamaterial durch einen negativen Brechungsindex für auftreffende akustische Wellen auszeichnen. Allgemein können gewünschten physikalischen (insbesondere akustischen) Eigenschaften eines Metamaterials primär auf dessen Struktur und weniger auf dessen eigentliches Material (zum Beispiel ein Kunststoff) zurückzuführen sein.

Die Struktur kann bevorzugt regelmäßig sein und Strukturelemente wie Freiräume, Kanäle, Öffnungen, Wände oder mit Material ausgefüllte Volumenelemente umfassen, welche nach Maßgabe der Struktur relativ zueinander angeordnet sind. Insbesondere kann das Metamaterial eine sich wiederholendes Muster dieser oder auch anderer Strukturelemente definieren. Eine bevorzugt regelmäßige Wiederholung der Strukturelemente kann entlang bzw. in einer Fläche der Schalldämpferanordnung erfolgen, optional aber auch in einer Dicken- oder Tiefenrichtung. Sämtliche Strukturelemente können dabei kleiner als die Wellenlängen in einem erwarteten bzw. typischen Wellenlängenspektrum der menschlichen Sprache dimensioniert sein.

Insbesondere kann das Metamaterial jegliche vorstehend geschilderten Strukturmerkmale umfassen oder bereitstellen. Beispielsweise können diese per 3D-Druck aus einem Kunststoff hergestellt werden, wobei das resultierende und entsprechend strukturierte Bauteil das Metamaterial umfasst oder bildet.

Vorliegend kann die Struktur des Metamaterials derart sein, dass der Anteil darin eintretender akustischer Wellen den Anteil hiervon abgestrahlter und/oder reflektierter akustischer Wellen deutlich überschreitet. Insbesondere können also akustische Wellen innerhalb der Struktur absorbiert werden, bevorzugt in der Weise, dass sie in vorbestimmter Weise innerhalb des Metermaterials geführt und geleitet werden, beispielsweise über eine Distanz von mehreren Millimetern.

Die der Schalldämpfung zugrundeliegende Wirkung eines eingesetzten Metamaterials kann vorliegend also primär auf eine Schallabsorptionsfähigkeit dieses Materials (bzw. von dessen Struktur) zurückzuführen sein und weniger auf das Erzeugen von Interferenzen durch Reflektieren von Schallwellen in Richtung der Quelle (dem Mund des Benutzers). Der Anteil einer von per Schallabsorption im Metamaterial erzielter Schalldämpfung (zum Beispiel einer Dezibelreduzierung) kann somit größer sein als ein Anteil von einer per Interferenzen oder anderweitigen Schallwellen-Überlagerungen erzielter Schalldämpfung.

Hierfür kann das Metamaterial eine akustisch aufnahmefähige und/oder durchlässige Oberfläche aufweisen, die zum Beispiel der Vorderseite der Schalldämpferanordnung zugewandt ist, sodass Schallwellen darin eintreten können. Aufgrund der geschilderten Führung der Schallwellen innerhalb der Struktur des Metamaterials können diese dann aber nicht mehr oder nur zu geringen Anteilen das Metamaterial wieder verlassen.

Metamaterialien zur Akustikdämpfung sind bekannt, bisher allerdings rein in Forschungszusammenhängen. Insbesondere grenzt sich die Erfindung von bisherigen Forschungen zu Metamaterialien durch das Vorschlagen einer praktischen Verwendung und dem Einbringen von Metamaterial in eine besonders ausgebildete, angeordnete und ggf. dimensionierte Schalldämpferanordnung für Spracherfassungsanordnung ab.

Eine Weiterbildung sieht vor, dass die Schalldämpferanordnung (und insbesondere die Schalldämpferstruktur) einen ersten Bereich aufweist, der für eine Schalldämpfung in einem ersten Frequenzbereich ausgelegt ist, und wenigstens einen weiteren Bereich, der für eine Schalldämpfung in einem zweiten Frequenzbereich ausgelegt ist, der mit dem ersten Frequenzbereich nicht oder zumindest nicht vollständig überlappt. Hierdurch können mehrere Frequenzbereiche akustisch gedämpft werden und kann somit die Bandbreite der Schalldämpfung verbessert werden.

Die Bereiche können dadurch bereitgestellt werden, dass gleichartige Strukturmerkmale jeglicher hierin geschilderten Art vorgesehen, aber in den genannten Bereichen z.B. unterschiedlich dimensioniert, angeordnet oder ausgerichtet sind und/oder sich ein durch voneinander abweichendes vibroakustisches Verhalten auszeichnen. Beispielsweise können in dem ersten Bereich die Strukturmerkmale größer dimensioniert sein, als gleichartige Strukturmerkmale in dem zweiten Bereich.

Zusätzlich oder alternativ kann vorgesehen sein, dass verschiedenartige Strukturmerkmale jeglicher hierin geschilderten Art vorgesehen sind, wobei in dem ersten Bereich Strukturmerkmale eine Art überwiegen (zum Beispiel dort ausschließlich vorgesehen sind) und in dem weiteren Bereich Strukturmerkmale einer anderen Art überwiegen (zum Beispiel dort ausschließlich vorgesehen sind).

Es versteht sich, dass auch mehr als drei unterschiedliche Strukturmerkmale miteinander kombiniert werden können, zum Beispiel die vorstehend genannte Kombination aus einer unebenen und insbesondere gezackten Oberfläche mit Öffnungen sowie faserartigen Bereichen. Dann können jegliche der Strukturmerkmale für ein Schalldämpfen in voneinander abweichenden bzw. individuellen Frequenzbereichen ausgelegt sein.

Bei einer weiteren Ausführungsform können der Spracherfassungsbereich und die Schalldämpferstruktur einander zumindest abschnittsweise überlappen. Dies betrifft insbesondere die vorstehend bereits angedeutete Variante, bei der der Spracherfassungsbereich bevorzugt rückseitig zumindest abschnittsweise durch die Schalldämpferstruktur von der Umgebung abgeschirmt wird.

Eine Weiterbildung sieht vor, dass die Anordnung auch einen Akustikausgabereich umfasst (zum Beispiel einen Lautsprecher), wobei in wenigstens einem ersten Betriebszustand der Spracherfassungsbereich entlang der Längsachse betrachtet zwischen dem Akustikausgabereich und wenigstens einem Abschnitt (z.B. einer Unterkante) der Schalldämpferanordnung positioniert ist.

Dieser Betriebszustand kann ein Grundzustand der Anordnung sein, beispielsweise falls die Schalldämpferanordnung nicht in der nachstehend erläuterten Weise verlagerbar, sondern dauerhaft ausgeklappt ist. Dann kann auch kein Betriebszustand mit einer abweichenden Relativanordnung der genannten Merkmale entlang der Längsachse vorgesehen sein. Bevorzugt wird aber die nachstehende Variante mit einem zweiten Betriebsmodus samt geänderter Relativanordnung und insbesondere mit einer verlagerbaren Schalldämpferanordnung.

Die entsprechende Positionierung entlang der Längsachse kann zum Beispiel dadurch erreicht werden, dass der Akustikausgabebereich nahe zu oder an einem Ohr des Benutzers positioniert wird. Der Spracherfassungsbereich kann hingegen unterhalb des Ohrs oder allgemein zwischen Ohr und Mund positioniert sein (zum Beispiel nahe einer Wange des Benutzers). Die Schalldämpferanordnung kann sich hingegen bis zu dem Mund erstrecken und diesen auch von der Umgebung zwecks Begrenzung von Schallemissionen abschirmen.

Ein Abstand von Akustikausgabebereich und Spracherfassungsbereich entlang der Längsachse kann mehrere Zentimeter und vorzugsweise wenigstens 5 cm, wenigstens 10 cm oder wenigstens 15 cm betragen. Ein Abstand zwischen einem äußersten Ende der Schalldämpferanordnung entlang der Längsachse und dem Spracherfassungsbereich kann ebenfalls vorzugsweise wenigstens 5 cm, wenigstens 10 cm oder wenigstens 15 cm betragen. Er kann aber auf maximal 20 cm oder maximal 30 cm beschränkt sein, um eine ausreichende Handhabbarkeit und/oder Verstaubarkeit zu gewährleisten.

Die geschilderte Weiterbildung ist insbesondere für Mobiltelefone vorteilhaft oder allgemein für bevorzugt handgehaltene Kommunikationseinrichtungen. Sie kann aber auch bei Headsets zum Einsatz kommen, zum Beispiel wenn die Schalldämpferanordnung dort über den Spracherfassungsbereich hinaus vor- oder absteht.

In diesem Zusammenhang kann ferner vorgesehen sein, dass die Spracherfassungsanordnung ein Gehäuse aufweist. Dieses kann in Spracherfassungsbereich und vorzugsweise auch den Akustikausgabebereich umfassen. Das Gehäuse kann einteilig oder mehrteilig sein. Es kann flächig ausgebildet sein. Es kann eine umlaufende rahmenartige Struktur aufweisen, deren Dicke eine Dicke des Gehäuses festlegt oder maßgeblich bestimmt. Es kann auch eine Anzeigeeinrichtung aufweisen oder aufnehmen, beispielsweise einen Touch-Screen. Die Anzeigeeinrichtung kann zumindest anteilig eine Vorderseite des Gehäuses bilden oder hiervon umfasst sein. Statt von einem Gehäuse kann auch von einem Mobiltelefon als solchem gesprochen werden.

Von der Vorderseite abgewandt kann eine Rückseite des Gehäuses bzw. des Mobiltelefons sein. An dieser kann die Schalldämpferanordnung aufgenommen, geführt, angelenkt oder anderweitig angeordnet, aufgenommen und insbesondere verlagerbar befestigt sein. Insbesondere kann die Schalldämpferanordnung relativ zu dem Gehäuse/Mobiltelefon verschiebbar sein und hierfür zum Beispiel entsprechend verschiebbar an der Rückseite des Gehäuses/Mobiltelefons angeordnet sein.

Insbesondere kann vorgesehen sein, dass die Schalldämpferanordnung gegenüber einem Gehäuse der Anordnung, das den Spracherfassungsbereich umfasst, derart verlagerbar ist, dass die Schalldämpferanordnung in einem zweiten Betriebszustand in einem geringeren Ausmaß oder auch gar nicht entlang der Längsachse (und zum Beispiel in Richtung des Munds eines Benutzers) von dem Gehäuse hervorsteht als in dem ersten Betriebsmodus.

Anders ausgedrückt können sich die Schalldämpferanordnung und das Gehäuse/Mobiltelefon im zweiten Betriebsmodus in einem größeren Ausmaß überlappen (insbesondere vollständig überlappen) als in dem ersten Betriebsmodus, in dem bevorzugt nur eine geringe Überlappung vorliegt (zum Beispiel eine um 80 % geringere Überlappung). Im ersten Betriebsmodus kann die Schalldämpferanordnung sich größtenteils frei von dem Gehäuse erstrecken und/oder größtenteils unverdeckt durch das Gehäuse sein und dann beispielsweise zumindest abschnittsweise einem Mund des Benutzers gegenüberliegen.

Der zweite Betriebsmodus kann auch als Ruhemodus bezeichnet werden oder allgemein als ein Modus, in dem die Schalldämpferanordnung eingefahren, eingeklappt und/oder inaktiv ist. Im ersten Betriebsmodus kann die Schalldämpferanordnung hingegen ausgeklappt, ausgefahren und/oder aktiv (d. h. schalldämpfend) sein. Vom ersten in den zweiten Betriebsmodus und umgekehrt kann durch ein Verlagern der Schalldämpferanordnung insbesondere relativ zu dem vorstehend erwähnten Gehäuse und/oder Mobiltelefon gewechselt werden.

Gemäß einer Variante ist die dann bevorzugt flächige Schalldämpferanordnung an der Rückseite des Gehäuses und/oder Mobiltelefons verschiebbar aufgenommen, zum Beispiel durch Anordnen zwischen seitlichen Führungsschienen. Die Führungsschienen können sich entlang der Längsachse erstrecken. Ein Benutzer kann bevorzugt manuell die Schalldämpferanordnung unter Führung durch diese Führungsschienen verschieben und zwar bevorzugt entlang der Längsachse und ferner bevorzugt derart, dass die Relativanordnung des ersten Betriebsmodus erreicht wird.

Es kann aber auch vorgesehen sein, dass zur Verlagerung und insbesondere zum Ausfahren der Schalldämpferanordnung ein Aktor vorgesehen ist, insbesondere ein Elektromotor. Dieser kann die Schalldämpferanordnung zwischen einer aktiven und inaktiven (insbesondere ausgefahrenen und eingefahrenen) Stellung bewegen.

Die seitlichen Führungsschienen können beidseitig der Schalldämpferanordnung positioniert sein. Eine Führungsschiene kann auch dadurch gebildet werden, dass die Schalldämpferanordnung zwischen einer das Gehäuse/Mobiltelefon umgebenen Hülle und einer Rückseite des Gehäuses/Mobiltelefons eingeschoben ist. Eine Führungswirkung kann dann durch die Innenwände und insbesondere inneren Seitenkanten (die auch als seitlichen Führungsschienen im vorstehenden Sinn fungieren können) dieser Hülle bereitgestellt werden.

Die Hülle kann eine Aussparung aufweisen, insbesondere eine längliche und/oder sich entlang der Längsachse erstreckende Aussparung. Hierdurch kann ein Benutzer in Kontakt mit der Schalldämpferanordnung treten und diese manuell verlagern bzw. herausschieben.

Grundsätzlich kann eine maximale Ausschublänge und/oder ein maximaler Verlagerungsweg der Schalldämpferanordnung insbesondere beim Wechseln vom zweiten in den ersten Betriebsmodus (und/oder umgekehrt) begrenzt sein, zum Beispiel durch eine geeignete Stoppeinrichtung oder Stoppkontur (z.B. eine Innenkante der vorstehenden Aussparung).

Die Verlagerbarkeit und allgemein der Wechsel zwischen dem zweiten und ersten Betriebsmodus ist aber nicht auf die geschilderten Verschiebungen der Schalldämpferanordnung relativ zu einem Gehäuse/Mobiltelefon beschränkt. Stattdessen kann die Schalldämpferanordnung zum Beispiel auch ausgeklappt oder ausgeschwenkt werden.

Grundsätzlich ist aber bevorzugt, dass in dem zweiten Betriebsmodus ein verstauter Zustand der Schalldämpferanordnung bereitstellbar ist, bei dem diese sich in einem größeren Ausmaß und bevorzugt vollständig mit dem Gehäuse/Mobiltelefon (zum Beispiel einem Grundriss hiervon) überdeckt und/oder nicht signifikant hiervon hervorsteht. In dem ersten Betriebsmodus kann hingegen ein unverstauter oder ausgefahrener Zustand der Schalldämpferanordnung bereitgestellt werden, bei dem diese sich in einem geringeren Ausmaß mit dem Gehäuse/Mobiltelefon (zum Beispiel einem Grundriss hiervon) überdeckt oder überlappt und/oder deutlich hiervon hervorsteht (zum Beispiel mit mehr als der Hälfte ihrer Länge).

Es kann auch vorgesehen sein, dass beim Wechsel zwischen dem zweiten und ersten Betriebsmodus Relativbewegungen von Schalldämpferanordnung und Gehäuse/Mobiltelefon um bzw. entlang mehrerer Raumachsen möglich sind. Beispielsweise kann die Schalldämpferanordnung zunächst in der geschilderten Weise relativ zu dem Gehäuse/Mobiltelefon verschoben werden, dann aber auch noch relativ hierzu rotierbar, biegbar und/oder knickbar sein, zum Beispiel in Richtung des Mundes eines Benutzers, um näher an die Schallquelle zu gelangen.

Allgemein stellt der Aspekt einer bevorzugt manuell verlagerbaren Schalldämpferanordnung zum Wechsel zwischen den geschilderten Betriebsmodi einen einfachen und zuverlässigen Weg dar, um bedarfsweise die Schalldämpfung zu erhöhen. Beispielsweise kann ein Benutzer nur dann die Schalldämpferanordnung bedarfsweise verlagern und insbesondere hervorschieben (d. h. vor seinen Mund schieben), wenn ihm dies aus Diskretionsgründen erforderlich scheint.

Die Erfindung betrifft auch eine Schalldämpferanordnung für eine Anordnung nach einem der vorangehenden Aspekte. Insbesondere (aber nicht zwingend) kann die Schalldämpferanordnung eine Vorderseite, eine Rückseite und eine Schalldämpferstruktur aufweisen, die sich zumindest teilweise zwischen der Vorderseite und der Rückseite erstreckt.

Zusätzlich oder alternativ kann die Schalldämpferanordnung einen Verbindungsabschnitt umfassen, der zum Beispiel mit anderen Komponenten der Anordnung und insbesondere einem Headset oder einem Mobiltelefon verbindbar ist. Der Verbindungsabschnitt kann zum Beispiel eine Aufnahmestruktur zum Herstellen einer kraft- oder formschlüssigen Verbindung umfassen.

Insbesondere kann der Verbindungsabschnitt an einen hierin geschilderten Tragarm eines Headsets (bevorzugt manuell und werkzeuglos) anbringbar sein. Ebenso kann der Verbindungsabschnitt in Eingriff mit einer Führungsschienenanordnung und/oder Hülle der Anordnung bringbar sein.

Prinzipiell betrifft die Erfindung auch das Verwenden einer Schalldämpferanordnung gemäß jeglicher hierin geschilderten Art zum Begrenzen von Schallemissionen in die Umgebung und insbesondere bei Spracherfassungsanordnungen, die an oder nahe des Kopfes der Person positioniert sind. Insbesondere betrifft die Erfindung das Verwenden einer solchen Schalldämpferanordnung bei Kommunikationseinrichtungen, Mobiltelefonen oder Headsets.

Im Folgenden werden Ausführungsformen der Erfindung anhand der beigefügten schematischen Figuren erläutert. In Ihrer Art und/oder Funktion übereinstimmende Merkmale können dabei figurenübergreifend und insbesondere ausführungsformübergreifend mit den gleichen Bezugszeichen versehen sein.
- Fig. 1: zeigt eine Vorderansicht einer Spracherfassungsanordnung gemäß einer ersten Ausführungsform;
- Fig. 2: zeigt eine Rückansicht der Spracherfassungsanordnung in einem zweiten Betriebsmodus mit eingefahrener Schalldämpferanordnung;
- Fig. 3: zeigt eine Rückansicht der Spracherfassungsanordnung in einem ersten Betriebsmodus mit ausgefahrener Schalldämpferanordnung;
- Fig. 4: zeigt eine Teilschnittansicht durch eine Schalldämpferanordnung der ersten Ausführungsform;
- Fig. 5: zeigt eine Benutzung der Spracherfassungsanordnung der vorangehenden Figuren in dem ersten Betriebsmodus;
- Fig. 6-7: zeigen Ansichten einer Spracherfassungsanordnung gemäß einer zweiten Ausführungsform;
- Fig. 7A: zeigt eine weitere Ausführungsform in einer zu Figur 7 analogen Ansicht;
- Fig. 8A-8B: zeigen eine optionale Weiterbildung der ersten Ausführungsform, bei der eine Ausrichtung der Schalldämpferanordnung nach einem Ausfahren veränderlich ist;
- Fig. 9: zeigt eine Spracherfassungsanordnung gemäß einem dritten Ausführungsbeispiel.
- Fig. 10A-10E: zeigen Beispiele für schalldämpfende Strukturen und Strukturmerkmale, die bei jeglicher hierin offenbarten Schalldämpferanordnung vorgesehen sein können.

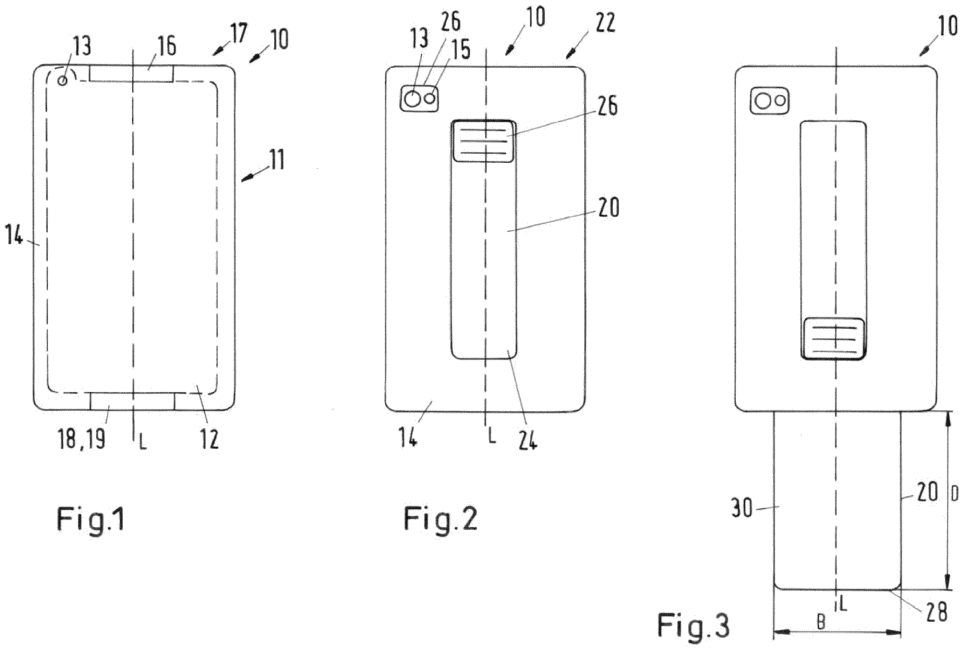

In Figur 1 ist eine Spracherfassungsanordnung 10 gemäß einer ersten Ausführungsform der Erfindung gezeigt. In diesem Fall ist die Spracherfassungsanordnung 10 in Form eines Mobiltelefons mit einem Gehäuse 17 und genauer gesagt als ein gängiges Smartphone ausgebildet, welches aber zusätzlich die nachstehend erläuterte Schalldämpferanordnung 20 aufweist.

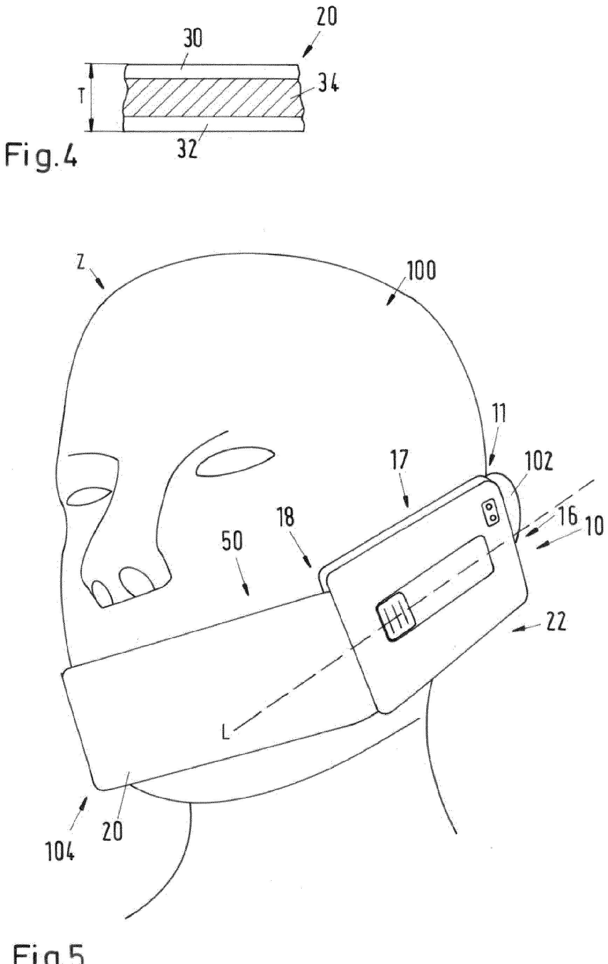

Gezeigt in Figur 1 ist eine Innenseite 11 der Spracherfassungsanordnung 10 (also eine Vorderseite des Mobiltelefons) mit einer großflächigen Anzeigeeinrichtung 12 (zum Beispiel einem Touchscreen). Die Innenseite 11 ist, wie anhand nachstehend erläuterter Figur 5 ersichtlich, bei Benutzung dem Benutzer zugewandt und liegt in der Regel an dessen Wange und/oder Ohr an.

Ferner gezeigt ist eine frontseitige Kamera 13. Gestrichelt angedeutet ist der Verlauf einer Hülle 14 (und genauer gesagt der Umriss von dessen nachstehender Ausnehmung), in die das Mobiltelefon eingeschoben wird. Die Hülle 14 weist an der gezeigten Vorderseite eine großflächige Ausnehmung auf, welche die Kamera 13 und die Anzeigeeinrichtung 12 frei lässt. Die Hülle 14 kann im Bereich der nachstehend erläuterten Oberseite und/oder Unterseite geöffnet sein (zum Beispiel dort Öffnungsschlitz aufweisen), sodass das Mobiltelefon dort eingeschoben werden kann. An den längeren Seitenkante entlang der Längsachse L ist die Hülle 14 bevorzugt größtenteils oder vollständig geschlossen.

An einer Oberseite des Gehäuses 17 weist das Mobiltelefon einen Akustikausgabebereich 16 auf, der einen nicht dargestellten Lautsprecher umfasst. An einer gegenüberliegenden Unterseite des Gehäuses 17 weist das Mobiltelefon einen Spracherfassungsbereich 18 mit einem nicht näher dargestellten Mikrofon 19 zur Spracherfassung auf. In diesen Bereichen 16, 18 kann die Hülle 14 jeweils perforiert sein.

Eingetragen ist auch eine Längsachse L der Spracherfassungsanordnung 10. Diese erstreckt sich im gezeigten Fall entlang einer längsten Seite bzw. Kante der Spracherfassungsanordnung 10 bzw. des Gehäuses 17 oder, allgemein ausgedrückt, entlang der längsten Dimension der Sparerfassungsanordnung 10 (was nicht zwingend, aber bevorzugt ist). Sie verbindet entsprechend die Oberseite und die Unterseite und auch in dem gezeigten Fall in Akustikausgabebereich 16 und den Spracherfassungsbereich 18. Bei Benutzung erstreckt sie sich entsprechend von einem Ohr des Benutzers in Richtung des Munds.

In Figur 2 ist eine Außenseite 22 der Spracherfassungsanordnung 10 gezeigt (also eine Rückseite des Mobiltelefons). Wie anhand von nachstehender Figur 5 ersichtlich, weist diese bei Benutzung vom Benutzer weg bzw. in die Umgebung. Die Hülle 14 ist in diesem Fall in einem größeren Ausmaß geschlossen und weist eine im Vergleich zur Innenseite 11 kleiner dimensionierte längliche Ausnehmung 24 auf. Die Ausnehmung 24 verläuft entlang der Längsachse L. Eine weitere optionale Ausnehmung 26, die deutlich kleiner dimensioniert ist, ist für eine rückseitige Kamera 13 sowie eine Lichtquelle 15 vorgesehen.

In die Ausnehmung 24 steht eine Kontaktfläche 26 hervor. Diese ist an der Rückseite einer Schalldämpferanordnung 20 angebracht. Die Kontaktfläche 26 ist zum Beispiel mit einem Finger kontaktierbar und dann entlang der Ausnehmung 24 verschiebbar. Im gleichen Ausmaß schiebt sich dann auch die Schalldämpferanordnung 20 aus der Hülle 14 heraus und in die in Figur 3 gezeigte Stellung.

Genauer gesagt ist in Figur 2 ein inaktiver Betriebsmodus gezeigt (hierin auch als zweiter Betriebsmodus bezeichnet), in dem die Schalldämpferanordnung 20 keine schalldämpfende Wirkung entfaltet. In Figur 3 ist hingegen ein aktiver Betriebsmodus gezeigt (hierin auch als erster Betriebsmodus bezeichnet), in dem die Schalldämpferanordnung 20 für eine Schalldämpfung verwendbar ist.

Dabei erkennt man in Figur 3, dass die Schalldämpferanordnung 20 entlang der Längsachse L über die Unterseite der Spracherfassungsanordnung 10 bzw. allgemein über das Gehäuse 17 hinaus hervorsteht und somit auch über den dort positionierten Spracherfassungsbereich 18 (siehe Figur 1). Eine Länge D, mit der die Schalldämpferanordnung 20 entsprechend hervorsteht, kann zum Beispiel wenigstens 10 cm oder auch wenigstens 15 cm betragen. Wie nachstehend anhand von Figur 5 erläutert, kann auf diese Weise die Schalldämpferanordnung 20 vor dem Mund eines Benutzers positioniert werden.

Eine Breite B kann zum Beispiel wenigstens 5 cm oder auch wenigstens 10 cm betragen. Die Breite B und Länge D verlaufen orthogonal zueinander und definieren eine Fläche der Schalldämpferanordnung 20.

Zusammengefasst kann ein Benutzer also durch Verschieben der Kontaktfläche 26 entlang der Längsachse L die Schalldämpferanordnung 20 in die Hülle 14 einschieben und aus dieser herausschieben. Die Hülle 14 und insbesondere deren die Schalldämpferanordnung 20 kontaktierenden Innenflächen (insbesondere die inneren Seitenkanten) bilden dabei eine Führungsstruktur oder auch Führungsschiene, um die Bewegung entlang der den Längsachse L zu führen. Eine untere Kante der Ausnehmung 24 begrenzt die Ausschublänge, da die Kontaktfläche 26 nicht über die Ausnehmung 24 hinaus verschoben werden kann.

In dem aktiven Betriebsmodus aus Figur 3 befindet sich, wie aus einer Zusammenschau der Figuren 1 und 3 ersichtlich, der Spracherfassungsbereich 18 entlang der Längsachse L betrachtet zwischen dem Akustikausgabebereich 16 und einem äußeren Ende der Schalldämpferanordnung 20 (zum Beispiel dessen in Figur 3 gezeigte äußerster bzw. unterster Unterkante 28). Anders ausgedrückt steht also die Schalldämpferanordnung 20 über den Spracherfassungsbereich 18 hervor und genauer gesagt entlang der Längsachse L über das Gehäuse 17 hinaus hervor.

Darauf hinzuweisen ist auch, dass der Spracherfassungsbereich 18 und die Schalldämpferanordnung 20 im gezeigten Fall einander nicht unmittelbar überlappen oder, mit anderen Worten, der Spracherfassungsbereich 18 nicht unmittelbar durch die Schalldämpferanordnung 20 abgeschirmt und/oder verdeckt wird, da sich zwischen diesen Merkmalen das Gehäuse 17 des Mobiltelefons 10 befindet.

Es versteht sich, dass eine entsprechend verschiebbare Schalldämpferanordnung 20 auch unabhängig von der Hülle 14 vorgesehen sein kann. Dann kann diese zum Beispiel verschiebbar an einer Rückseite des Mobiltelefons 10 gelagert sein.

In Figur 4 ist eine Querschnittsansicht durch einen beispielhaften Bereich der Schalldämpferanordnung 20 gezeigt. Die Querschnittsebene steht dabei senkrecht auf der Längsachse L. Gezeigt ist, dass die Schalldämpferanordnung 20 eine Rückseite 30 und eine Vorderseite 32 aufweist. In Figur 3 ist die Rückseite 30 dem Betrachter zugewandt und erstreckt sich entsprechend entlang der Außenseite 22 der Spracherfassungsanordnung 10 bzw. bildet einen Abschnitt dieser Außenseite 22.

Eine Vorderseite 32 ist hingegen in Figur 3 vom Betrachter abgewandt und einem Benutzer zugewandt. Insbesondere ist sie, wie anhand nachstehender Figur 5 erläutert, vor dem Mund eines Benutzers platzierbar.

Die Vorder- und Rückseite 32, 30 können aus einem gleichartigen oder auch verschiedenartigen Material ausgebildet sein. Bevorzugt ist die Vorderseite 32 akustisch durchlässig. Alternativ kann sie jegliche hierin offenbarten schalldämpfenden Strukturmerkmale aufweisen. Für die Rückseite 30 ist eine akustische Durchlässigkeit nicht zwingend erforderlich. Diese kann stattdessen sogar akustisch im Wesentlichen undurchlässig sein und/oder allgemein geschlossen sein und optional eine schalldämpfende Wirkung bereitstellen. Die Vorderseite 32 kann zum Beispiel perforiert sein. Sie ist jedoch bevorzugt glatt und somit leicht abwischbar, um eine Desinfektion zu ermöglichen.

Die Vorderseite 32 und Rückseite 30 schließen zwischen sich eine Schalldämpferstruktur 34 ein. Die Schalldämpferstruktur 34 kann auch die Vorderseite 32 und/oder Rückseite 30 bilden oder einstückig hiermit ausgebildet sein. Die Schalldämpferstruktur 34 weist ein bevorzugt regelmäßiges Muster aus Freiräumen und Materialabschnitten (zum Beispiel Wänden) auf, um Schallwellen aufnehmen und in einer schalldämpfenden Weise innerhalb der Struktur zu führen und insbesondere absorbieren zu können. Besonders bevorzugt weist die Schalldämpferstruktur 34 ein Metamaterial und/oder jegliche hierin offenbarten Strukturmerkmale auf bzw. besteht aus (einem) solchen.

In einer bevorzugten Variante weist die Vorderseite 32 (insbesondere bei einstückigem Ausbilden mit der Schalldämpferstruktur 34) eine unebene Oberfläche der hierin offenbarten Art auf, zum Beispiel eine gewellte oder gezackte Oberfläche (bzw. eine Oberfläche mit einem entsprechend gewellten oder gezackten Höhenprofil). Zusätzlich oder alternativ kann die Oberfläche faserartig texturiert sein, also z.B. eine Vielzahl von hervorstehenden faserartigen Materialabschnitten aufweisen, die bspw. eine Art Faserkissen bilden. Entlang der Tiefendimension T betrachtet unter der Vorderseite 32 und/oder darin mündend können weitere Strukturmerkmale vorgesehen sein, insbesondere innerhalb der Schalldämpferstruktur 34. Hierbei handelt es sich vorzugsweise um Hemlhotzresonatoren, Kanäle oder allgemeine Öffnungen.

Es versteht sich, dass die erläuterten Kombinationen von Strukturmerkmalen auch unabhängig von einem etwaigen sandwichartigen Aufbau der Schalldämpferanordnung 20 vorgesehen sein können.

Allgemein ist die Schalldämpferanordnung 20 flächig ausgebildet, sodass eine angedeutete Dicke T aus Figur 4 deutlich geringer als zum Beispiel die Länge D aus Figur 3 ist (zum Beispiel weniger als 20 % oder auch weniger als 10 % hiervon beträgt).

In Figur 5 ist die Spracherfassungsanordnung 10 in dem zweiten Betriebsmodus aus Figur 3 gezeigt, und zwar in einem durch einen Benutzer 100 benutzten Zustand. Die Größenverhältnisse und insbesondere eine Länge D der Schalldämpferstruktur 20 können dabei von der Darstellung aus Figur 3 abweichen. Nicht gezeigt ist eine Hand des Benutzers 100, mit der dieser die Spracherfassungsanordnung 10 hält.

Man erkennt, dass die in Figur 5 vom Betrachter abgewandte Innenseite 11 dem Benutzer 100 zugewandt ist und derart positioniert ist, dass der verdeckte Akustikausgabebereich 16 an einem Ohr 102 des Benutzers 100 anliegt. Der ebenfalls verdeckte Spracherfassungsbereich 18 befindet sich hingegen im Bereich einer Wange und somit seitlich und leicht oberhalb von einem Mund 104 des Benutzers 100.

Auch der Mund 104 ist verdeckt und zwar durch die Schalldämpferanordnung 20. Diese erstreckt sich von der Unterseite des Gehäuses 17 entlang der Längsachse L und steht über den Spracherfassungsbereich 18 hinaus bis zum Mund 104 hervor. Dabei ist die Vorderseite 32 dem Benutzer 100 zugewandt, sodass von ihm erzeugte Schallwellen (d. h. Sprachschall) auf die Schalldämpferanordnung 20 treffen und darin auf die Schalldämpferstruktur 34.

Man erkennt, dass die flächige Schalldämpferanordnung 20 sich nicht zwingend parallel zur Längsachse L erstrecken muss. Stattdessen kann sie von dieser weggebogen oder gegenüber einer eine Rückseite des Mobiltelefons enthaltenen Raumebene in Richtung des Benutzers 100 verkippt sein. Hierfür kann sie drehgelenkig mit dem Mobiltelefon 100 und insbesondere der Hülle 14 verbunden sein. Es ist auch möglich, dass die Schalldämpferanordnung 20 einen geeignet deformierbaren Abschnitt umfasst, zum Beispiel ein Drehgelenk, das ein Festkörpergelenk sein kann, einen knickbaren Bereich oder einen Klappmechanismus.

Zusammengefasst zeigen die Figuren 1 bis 5, dass eine Außenseite 22 insbesondere im Bereich des Munds 104 des Benutzers 100 zumindest abschnittsweise von der Schalldämpferanordnung 20 gebildet wird. Eine Innenseite 11 weist hingegen den Spracherfassungsbereich 18 auf. Dieser ist dort nicht verdeckt, insbesondere nicht von der Schalldämpferanordnung 20, welche allenfalls Bereiche der Innenseite 11 bildet, die abseits des Spracherfassungsbereichs 18 liegen.

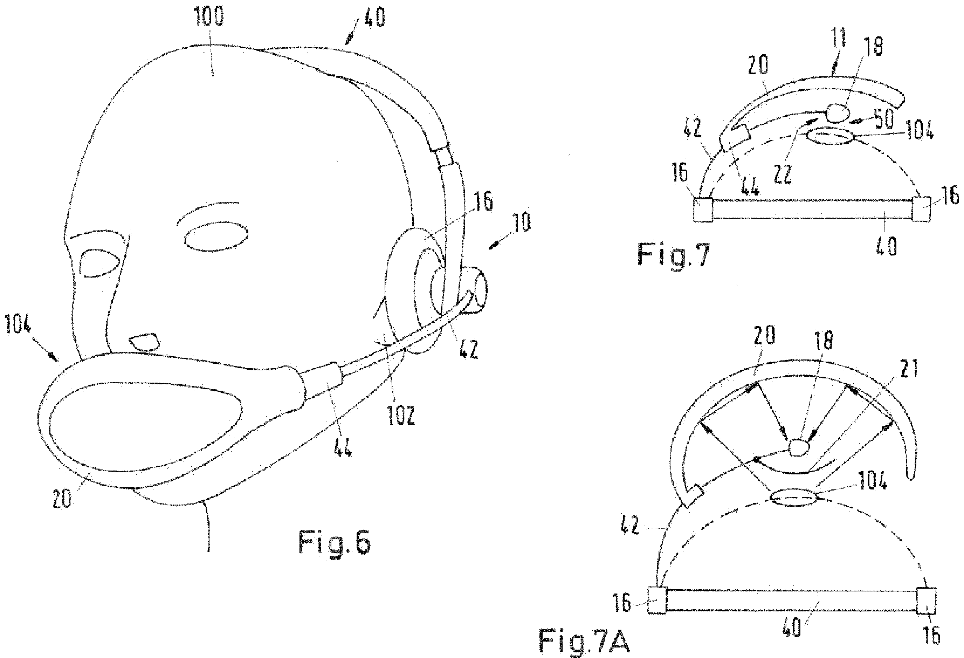

Durch die Schalldämpferanordnung 20 wird auch ein Freiraum 50 zwischen einem Mund 104 des Benutzers 100 und dem Spracherfassungsbereich 18 freigelassen, sodass zumindest ein Anteil des Sprachschalls des Benutzers 100 von der Schalldämpferanordnung 20 ungedämpft zu dem Spracherfassungsbereich 18 durch diesen Freiraum 50 hindurch gelangen kann. Andererseits kann der Sprachschall nicht beliebig in die Umgebung abgestrahlt werden, sondern trifft vorher auf die Schalldämpferanordnung 20 (insbesondere in einem aus Sicht des Benutzers 100 vorausliegenden Bereich). Die Lage und Erstreckung des Freiraums 50 verdeutlicht sich auch aus der Diskussion eines analogen Freiraums 50 anhand der nachstehenden Figur 7.

In Figur 6 ist eine Spracherfassungsanordnung 10 gemäß einem weiteren Ausführungsbeispiel gezeigt. Die Spracherfassungsanordnung 10 ist als ein Headset ausgebildet und umfasst eine nachstehend erläuterte Schalldämpferanordnung 20.

Gezeigt ist ein Bügel 40, der in an sich bekannter Weise eine Positionierung am Kopf des Benutzers 100 ermöglicht. Optional kann dabei vorgesehen sein, dass das Headset auch einen Akustikausgabebereich 16 in Form von Lautsprechern umfasst, die direkt an den Ohren 102 des Benutzers 100 anliegen. Es kann sich folglich um ein Headset mit Kopfhörerfunktion oder umfassend einen Kopfhörer handeln.

Von dem Bügel 40 erstreckt sich ein länglicher Tragbügel oder Tragarm 42. Dieser verläuft von einem Bereich des Ohrs 102 bzw. vom Akustikausgabebereich 16 in Richtung eines erneut verdeckten Munds 104 des Benutzers 100. An dem Tragarm 42 angebracht ist auch die Schalldämpferanordnung 20, und zwar über einen Verbindungsabschnitt 44. Dieser ist derart gestaltet, dass er nachträglich an dem Tragarm 42 anbringbar ist. Beispielsweise kann der Verbindungsabschnitt 44 einen geöffneten Ring umfassen, der unter elastischer Deformation auf den Tragarm 42 aufschiebbar ist.

In Figur 7 ist eine stark vereinfachte Draufsicht auf die Ansicht von Figur 6 gezeigt. Man erkennt wiederum den Bügel 40 sowie beidseitig (d. h. an beiden Ohren 102) positionierte Akustikausgabebereiche 16. Weiter erkennt man den sich in Richtung des Mundes 104 erstreckenden Tragarm 42. An seinem freien Ende weist dieser einen Spracherfassungsbereich 18 mit einem nicht gesondert dargestellten Mikrofon auf. Weiter erkennt man den Verbindungsabschnitts 44 und die erneut flächig ausgebildete Schalldämpferstruktur 20. Diese erstreckt sich ausgehend von dem Verbindungsabschnitts 44 bis vor den Mund 104, sodass der Spracherfassungsbereich 18 zwischen dem Mund 104 und der Schalldämpferanordnung 20 positioniert ist. Es existiert also ein Freiraum 50 zwischen dem Spracherfassungsbereich 18 und dem Mund 104, der durch die Schalldämpferanordnung 20 nicht verdeckt wird.

Zurückkommend auf die erste Ausführungsform wäre bei einer analogen Draufsicht zur Fig. 7 der Spracherfassungsbereich 18 im Bereich des Verbindungsabschnitts 44 positioniert. Der Freiraum 50 wäre dann als schmaler länglicher Raum ebenfalls zwischen der Schalldämpferstruktur 20 und dem Mund 104 definiert, der sich ausgehend vom Mund 104 zum Beispiel entlang des Tragarmabschnitts zwischen dem Spracherfassungsbereich 18 und dem Verbindungsabschnitt 44 aus Figur 7 erstrecken würde.

Wieder bezugnehmend auf das zweite Ausführungsbeispiel der Figuren 6 und 7 bildet die Schalldämpferanordnung 20 also zumindest abschnittsweise und insbesondere im Bereich vor dem Mund 104 eine Außenseite 22 der Anordnung 10. Der Spracherfassungsbereich 18 bildet hingegen insbesondere vor dem Mund 104 einen Abschnitt einer Innenseite 11 der Anordnung 10. Er ist folglich zwischen Mund 104 bzw. der Person 100 und der Schalldämpferanordnung 20 positioniert, bespielweise entlang (und/oder parallel zu) einer Achse betrachtet, die einer Blickachse bei einem gerade nach vorn Blicken der Person 100 entspricht (und/oder die orthogonal auf der Schalldämpferanordnung 20 steht).

Auch ist die Schalldämpferanordnung 20 analog zur Variante aus Figur 4 ausgebildet und umfasst somit eine sandwichartig eingeschlossene Materiallage in Form der Schalldämpferstruktur 34, die sich insbesondere im Bereich vor dem Mund 104 erstreckt. Die Schalldämpferanordnung 20 ist allgemein erneut flächig ausgebildet, jedoch als eine gewölbte Fläche, insbesondere als eine an der Außenseite 11 konvex gewölbte Fläche.

Die Wölbung kann derart gewählt sein, dass die Schalldämpferanordnung 20 die hierin offenbarte Bündelung des Sprachschalls im Bereich des Mikrofons 18 ermöglicht. Hierfür kann die Wölbung deutlich stärker als in Fig. 7 sein und kann die Schalldämpferanordnung 20 allgemein großflächiger ausgebildet sein.

Ein entsprechendes Beispiel ist in Fig. 7A in einer zur Figur 7 analogen Ansicht gezeigt. Gezeigt ist die entsprechend stärker gewölbte Schalldämpferstruktur 20, die wiederum am Tragarm 42 angebracht ist. Pfeilförmig gezeigt sind Schallwellen, die vom Mund 104 des Nutzers ausgehen, und an der dem Betrachter zugewandten Innenseite der Schalldämpferanordnung 20 bevorzugt mehrfach reflektiert werden. Man erkennt, dass dies derart erfolgt, dass die Schallwellen im Bereich des Mikrofons 18 zusammenlaufen, also dort gebündelt werden.

Als ein optionales weiteres Merkmal ist zwischen dem Mund 104 und die Mikrofon 18 eine Zusatzschalldämpferanordnung 21 gezeigt. Diese kann prinzipiell gemäß jeglicher hierin geschilderte Varianten der Schalldämpferanordnung 20 ausgebildet sein und insbesondere eine entsprechende Schalldämpferstruktur 34 aufweisen. Beispielhaft ist die Zusatzschalldämpferanordnung 21 wiederum flächig und gewölbt ausbildet. Dies erfolgt derart, dass die die Mikrofon 18 zugewandt konkav gewölbt ist. Entsprechend kann sie sich zu dem Mund 104 hin mit konvexer Wölbung erstrecken, was jedoch rein optional ist.

Mit der Zusatzschalldämpferanordnung 21 kann verhindert werden, dass der gebündelte Schall zu großen Teilen über das Mikrofon 18 hinaus wieder in die Umgebung austritt.

Obwohl aus Sicht des Mikrofons 18 der Mund 104 durch die Zusatzschalldämpferanordnung 21 abgeschirmt ist, können über die Bündelung ausreichend Schallwellen das Mikrofon 18 erreichen.

Die Schalldämpferanordnung 20 und der Spracherfassungsbereich 18 überlappen einander insbesondere im Bereich des Mundes 104. Diese Überlappung kann als unmittelbar bezeichnet werden, da sich keine anderweitigen Komponenten und insbesondere keine Gehäuseabschnitte eines etwaigen Mobiltelefons oder dergleichen zwischen der Schalldämpferanordnung 20 und dem Spracherfassungsbereich 18 befinden. Anders ausgedrückt wird also der Spracherfassungsbereich 18 durch die Schalldämpferanordnung 20 zur Umgebung hin großflächig abgeschirmt. Nicht vom Spracherfassungsbereich 18 absorbierter Sprachschall kann somit durch die Schalldämpferanordnung 20 gedämpft und genauer gesagt absorbiert werden.

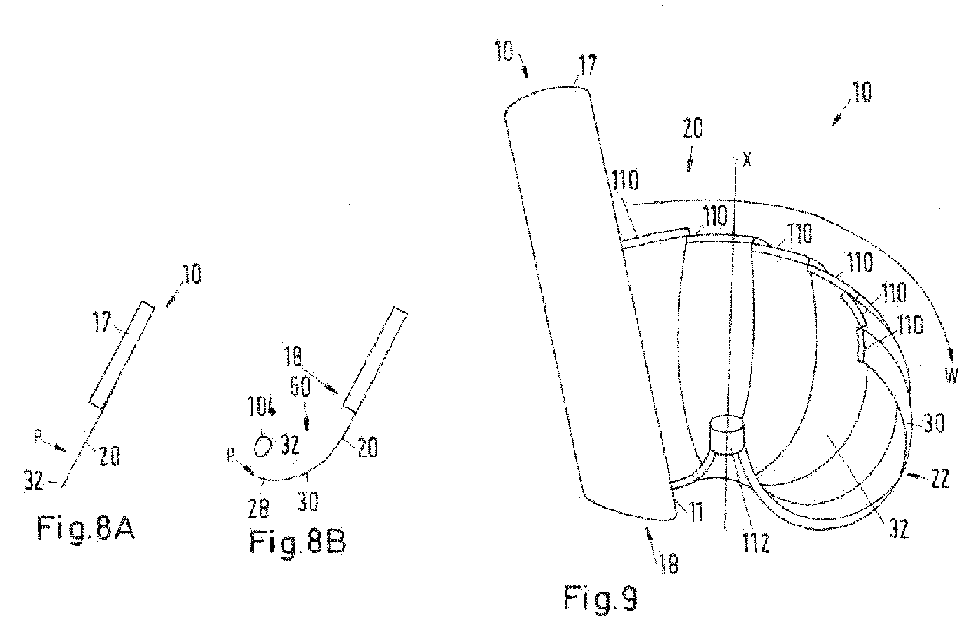

In den Figuren 8A-B ist eine auf die erste Ausführungsform aufbauende Weiterbildung gezeigt. Dabei ist eine Draufsicht auf die Spracherfassungsanordnung 10 gezeigt, wobei eine Blickrichtung dem Pfeil Z aus Figur 5 entspricht. In Figur 8B ist auch die Position des Munds 104 des Benutzers 100 schematisch angedeutet. Auch der vorstehend diskutierte Freiraum 50 zwischen dem Mund 104 und der Spracherfassungseinrichtungen 18 ist markiert.

In Figur 8A wurde die Schalldämpferanordnung 20 bereits ausgefahren und befindet sich in einer aktiven Stellung (d. h. im ersten Betriebsmodus). Die Schalldämpferanordnung 20 ist in diesem Fall eben und erstreckt sich insbesondere parallel zu einer Rückseite des Gehäuses 17.

Wie durch einen Pfeil P angedeutet, kann der Benutzer eine Kraft auf die Schalldämpferanordnung 20 aufbringen und insbesondere eine Druckkraft. Dies führt dazu, dass die Schalldämpferanordnung 20 den gewölbten Verlauf aus Figur 8B annimmt. Insbesondere nimmt die Schalldämpferanordnung 20 dann eine (zum Beispiel an dessen Vorderseite 32) konkave Wölbung ein, sodass sie sich sozusagen um den Mund 104 des Benutzers 100 herumbiegt. Dies verstärkt eine schallmindernde Wirkung, da die Schalldämpferanordnung 20 den Mund 104 besser gegenüber der Umgebung abschirmt.

Alternativ wäre auch ein scharfer Knick im Bereich des Pfeils P möglich, zumal wenn dort ein Scharnier oder Festkörpergelenk vorgesehen ist. Dann könnte die Schalldämpferanordnung 20 zumindest abschnittsweise in Richtung des Munds 104 geklappt werden

Ist ein Gespräch beendet, kann der Bediener durch Aufbringen einer Druckkraft zum Beispiel an einer Unterkante 28 der Schalldämpferanordnung 20 diese wieder in ihren ebenen Zustand versetzen und dann in die Hülle 14 aus Figur 2 einschieben.

Auf diese Weise wird ein dritter Betriebsmodus gemäß Figur 8B bereitgestellt, in dem die Schalldämpferanordnung 20 für eine besonders effektive Schalldämpfung geeignet gewölbt (oder optional geknickt) ist. Gleichzeitig ist aber auch eine Verstaubarkeit gewährleistet, da die Schalldämpferanordnung 20 wieder in einen ebenen Zustand versetzt werden kann.

Der Wechsel zwischen dem ebenen und gewölbten Zustand kann zum Beispiel dadurch erreicht werden, dass die Druckkraft P auf einen geringfügig konvex gewölbten Bereich an der Vorderseite der Schalldämpferanordnung 32 oder allgemein auf eine dortige zum Beispiel hervorstehende Falz ausgeübt wird. Die Druckkraft P kann dann bewirken, dass dieser Bereich elastisch deformiert wird und sprunghaft eine gegenteilige Wölbung oder Knickung (zum Beispiel eine konkave Wölbung oder eine an der Rückseite 30 hervorstehende Falz) annimmt bzw. ausbildet. Hierfür kann die Schalldämpferanordnung 20 ein entsprechend elastisch deformierbares und vorzugsweise ein metallisches Material umfassen.

Wie erwähnt, kann alternativ im Bereich des Pfeils P ein Festkörpergelenk oder ein Scharnier vorgesehen sein, sodass dann ein Unterabschnitt umfassend die Unterkante 28 in Richtung des Mundes 18 abgeknickt oder umgeschwenkt werden kann.

Abschließend ist in Figur 9 eine dritte Ausführungsform gezeigt. Diese ist bevorzugt für Kommunikationsverrichtungen wie ein Mobiltelefon geeignet, von dem wiederum ein Gehäuse 17 gezeigt ist. In diesem Fall blickt man auf eine Rückseite des Gehäuses 17. An einer (in Figur 9 vom Betrachter abgewandten) Seitenkante des Gehäuses (zum Beispiel wiederum innerhalb eines Abschnitts oder an einem Abschnitt einer dort verlaufenden Hülle) ist die Schalldämpferanordnung 20 angeordnet oder daran befestigt und somit zumindest mittelbar mit dem Gehäuse 17 (zum Beispiel über die Hülle) verbunden.

In einem nicht dargestellten eingefahrenen Zustand kann die Schalldämpferanordnung 20 im Bereich der (in Figur 9 vom Betrachter abgewandten) Seitenkante positioniert sein und sich zum Beispiel quer zu einer Vorderseite des Gehäuses 17 erstrecken.

In dem dargestellten ausgefahrenen Zustand bildet die Schalldämpferanordnung 20 eine Art gewölbte schalenförmige Struktur aus. Genauer gesagt ist die Schalldämpferanordnung 20 fächerartig aufgebaut und umfasst mehrere Fächerelemente 110. Diese sind jeweils mit einem gemeinsamen Rotationsgelenk 112 verbunden und jeweils um eine gemeinsame Rotationsachse R rotierbar. Sie sind entlang einer Bewegungsachse W, die gekrümmt ist, beispielsweise ausgehend von der Seitenkante des Gehäuses 17 um die Rotationsachse X rotierbar Dabei bleiben sie aber vorzugsweise in Kontakt mit jeweils unmittelbar benachbarten Fächerelementen 110. Hierdurch ergibt sich eine bevorzugt geschlossene Struktur.

Die Fächerelemente 110 sind um ein in Figur 9 unterschiedliches und von links nach rechts allgemein zunehmendes Bewegungsausmaß entlang der Bewegungsachse W von der Seitenkante 17 wegbewegbar.

Somit können die Fächerelemente 110 den Mund 104 eines Nutzers mit einer konkav gewölbten Vorderseite 32 umgeben und daher besonders effektiv Sprachschall einfangen und absorbieren. Auch mit dieser Variante kann zudem der hierin offenbarte Bündelungseffekt erzielt werden und können die Fächerelemente 110 parabolartig reflektieren und bündeln.

In dem Rotationsgelenk 112 kann ein Aktor vorgesehen sein (Elektromotor), der dazu eingerichtet ist, die Fächerelemente 110 entlang der Bewegungsachse W zu bewegen. Vorzugsweise bewegt er sie auch entgegen der markierten Richtung, um die Schalldämpferanordnung 20 in einen inaktiven Zustand zu bringen.

Ein nicht dargestellter Spracherfassungsbereich 18 bildet erneut einen Abschnitt der Innenseite 11 dieser Spracherfassungsanordnung 10. Eine konvex gewölbte Rückseite 30 der Schalldämpferanordnung 20 bildet zumindest abschnittsweise eine Außenseite 22 der Anordnung 10.

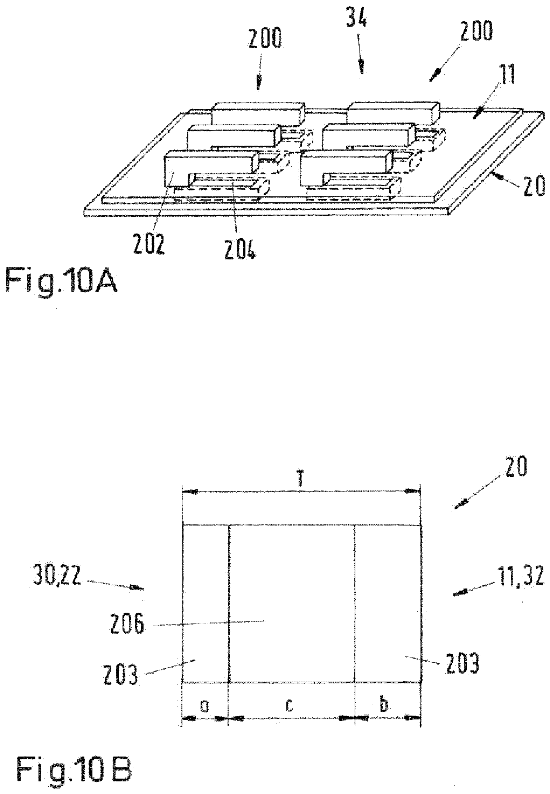

Nachstehend werden anhand der Figuren 10A-10E beispielhafte Oberflächengestaltungen der Schalldämpferanordnung 20 und insbesondere einer etwaigen Schalldämpferstruktur 34 hiervon sowie alternative Aufbauten der Schalldämpferanordnung 20 erläutert. Insbesondere werden Strukturelemente erläutert, die zur Absorption von Sprachschall zum Einsatz kommen können. Es handelt sich jeweils um abschnitthafte Ansichten, d. h. lediglich um Teilansichten oder Teilausschnitte aus einer deutlich größeren Oberfläche. Etwaige Wölbungen dieser Oberfläche sind nicht dargestellt, können aber dennoch vorgesehen sein.

In Figur 10 A ist ein Ausschnitt einer Schalldämpferstruktur 20 gezeigt, wobei man auf die dem Nutzer 100 zugewandte Innenseite 11 blickt. Die Schalldämpferstruktur 20 weist eine Schalldämpferstruktur 34 mit lediglich beispielhaft in einem regelmäßigen Raster angeordneten Gruppierungen 200 einander räumlich zugeordneter Strukturelemente 202, 204 auf. Nicht sämtliche Gruppierungen 200 (insgesamt sechs) und Strukturelemente 200, 204 sind mit einem eigenen Bezugszeichen versehen.

Jede Gruppierung 200 umfasst als ein erstes Strukturelement ein vibroakustisches Element 202 und als zumindest Teil eines zweiten Strukturelements eine Öffnung 204. Diese ist bevorzugt Teil eines Helmholtzresonators oder eines labyrinthartigen Kanals, deren Erstreckung innerhalb der Schalldämpferanordnung 20 gestrichelt angedeutet ist, und die das eigentliche zweite Strukturelement bilden.

Lediglich beispielhaft ist die Schalldämpferstruktur 34 zweilagig ausgebildet, um die Fertigung der zweiten Strukturelemente 204 zu vereinfachen und beispielsweise unabhängig von der Fertigung der ersten Strukturelemente 202 durchführen zu können.

Die ersten und zweiten Strukturelemente 202, 204 sind übereinander positioniert. Sie sind bevorzugt dazu ausgebildet, Schalldämpfungen in voneinander abweichenden Frequenzbereichen durchzuführen. Hierunter kann verstanden werden, dass die schalldämpfende Wirkung hauptsächlich einem entsprechenden Frequenzbereich zuzuordnen ist (beispielsweise dort ein Maximum erreicht oder konstant über einer Mindestdämpfung liegt) und sich die beiden Frequenzbereiche der Strukturelemente 202, 204 voneinander unterscheiden.

In Figur 10B ist eine zu Fig. 4 analoge Querschnittsansicht einer Schalldämpferanordnung 20 gezeigt, allerdings mit gedrehter Orientierung (sh. ggü. Fig. 4 gedrehte Tiefendimension T). Die Schalldämpferstruktur 34 ist als Abfolge mehrerer unterschiedlicher Materiallagen ausgebildet. An ihrer Vorder- und Rückseite 32, 30 weist sie jeweils eine Materialschicht bzw. -lage 203 auf, die analog zu jeglicher vorstehenden Schalldämpferstruktur 34 ausgebildet und/oder die eine poröse Materialschicht sein kann. Dazwischen ist ein Hohlkammerabschnitt 206 positioniert, der eine Schalltransmission verringern kann. Der Hohlkammerabschnitt 206 kann mit einem Edelgas oder einem Gasgemisch (z.B. Luft) gefüllt sein. Eine Dicke a, b, c der einzelnen Lagen 203, 206 kann je nach gewünschtem (Haupt-) Frequenzbereich der Schalldämpfung gewählt werden.

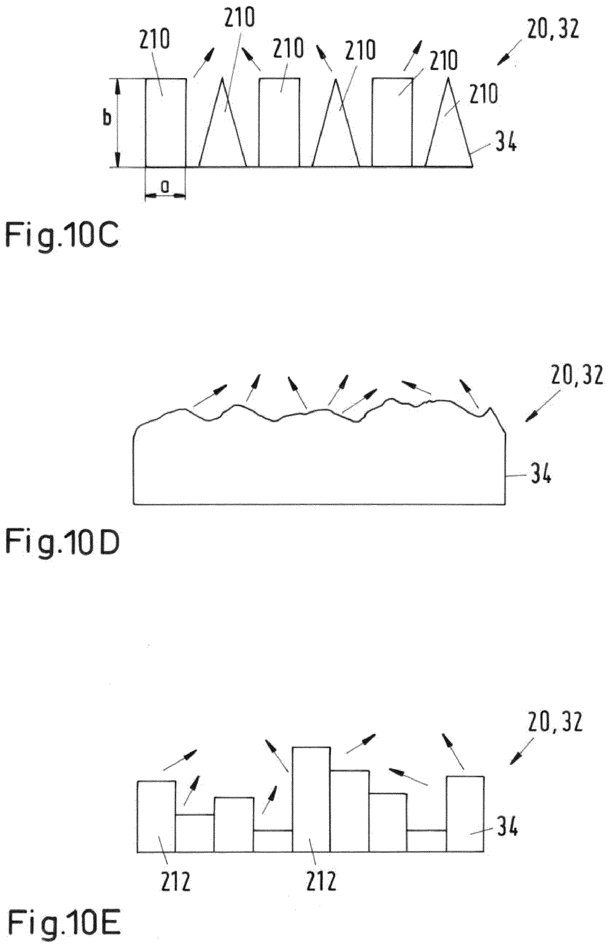

In den Figuren 10C-10E sind Höhenprofile einer Oberfläche der Schalldämpferanordnung 20 gezeigt und insbesondere von deren Schalldämpferstruktur 34 und/oder Vorderseite 32. Es handelt sich um Beispiele unebener Oberflächen als Strukturmerkmale zur Schalldämpfung. Mit Pfeilen angedeutet sind dabei diffuse Reflexionen von auftreffendem Sprachschall mittels dieser Oberflächen. Dies kann zu einer schallmindernden Auslöschung führen.

In Figur 10C sind als Strukturelemente Absorberkeile 210 gezeigt. Die Absorberkeile 210 sind relativ zueinander verdreht, wobei man bei den rechteckigen Absorberkeile 210 auf deren in die Blattebene geneigte Seitenflächen blickt. Die Abmessungen a, b der einzelnen Absorberkeile 210 können variieren, um eine breitbandige Schalldämpfung zu erzielen.

In Figur 10D ist als Strukturelement ein unregelmäßiges Höhenprofil und insbesondere eine makroskopische Oberflächenrauheit gezeigt. Hierbei ist insbesondere vorgesehen, dass keine glatten Oberflächenabschnitte vorgesehen sind oder zumindest entsprechend glatte Oberflächenabschnitte unterhalb eines zulässigen Maximalwertes zum Beispiel bezüglich ihrer Länge und/oder Fläche liegen.

In Figur 10E ist als Strukturelement eine Abfolge unterschiedlich weit hervorstehender Oberflächenbereiche 212 gezeigt. Diese sind lediglich beispielhaft säulenartig dargestellt und können auch einstückig miteinander verbunden sein. Auch in diesem Fall können Abmessungen und insbesondere der Umgebung zugewandte Außenflächen dieser einzelnen Oberflächenbereiche 212 variieren.

## Patentansprüche

1. Anordnung zur Spracherfassung (10), die an oder nahe des Kopfes einer sprechenden Person (100) positionierbar ist, mit:
einem ein Mikrofon (19) umfassenden Spracherfassungsbereich (18); und
einer Schalldämpferanordnung (20), die vor dem Mund (104) der Person (100) positionierbar ist, und zwar derart,:
- dass der Spracherfassungsbereich (18) zumindest teilweise zwischen der Schalldämpferanordnung (20) und dem Mund (104) angeordnet ist; und/oder
- dass ein Freiraum (50) zwischen Mund (104) und Spracherfassungsbereich (18) durch die Schalldämpferanordnung (20) zumindest teilweise unversperrt ist,
**dadurch gekennzeichnet, dass**
die Schalldämpferanordnung (20) wenigstens einen vibroakustischen Bereich aufweist und/oder dass die Schalldämpferanordnung (20) an einer der Person zugewandten Vorderseite (32) zumindest bereichsweise eine faserige Oberflächentextur mit einer Vielzahl von hervorstehenden faserartigen Materialabschnitten aufweist.

2. Anordnung (10) nach Anspruch 1,
**dadurch gekennzeichnet, dass** die Schalldämpferanordnung (20) flächig ausgebildet ist.

3. Anordnung (10) nach Anspruch 1 oder 2,
**dadurch gekennzeichnet, dass** die Schalldämpferanordnung (20) eine Länge (D) von wenigstens 5 cm und vorzugweise wenigstens 10 cm aufweist.

4. Anordnung (10) nach einem der vorangehenden Ansprüche,
**dadurch gekennzeichnet, dass** die Schalldämpferanordnung (20) zumindest abschnittsweise vor dem Mund (104) der Person (100) positionierbar ist.

5. Anordnung (10) nach einem der vorangehenden Ansprüche,
**dadurch gekennzeichnet, dass** die Schalldämpferanordnung (20) dazu eingerichtet ist, von der Person (100) erzeugte Sprachschallwellen zumindest teilweise in einem vorbestimmten Bereich zu bündeln.

6. Anordnung (10) nach einem der vorangehenden Ansprüche,
**dadurch gekennzeichnet, dass** die Schalldämpferanordnung (20) einen der Person (100) zugewandten Bereich mit einer unebenen Oberfläche und/oder Helmholtzresonatoren und/oder Absorberkeile (210) und/oder Kanäle mit einem gewinkelten Verlauf aufweist.

7. Anordnung nach einem der vorangegangenen Ansprüche,
wobei der vibroakustische Bereich eine Mehrzahl von vibroakustischen Elementen (202) aufweist und die vibroakustischen Elemente (202) jeweils im Bereich eines Helmholtzresonators oder eine Kanals nach Anspruch 6 positioniert sind.

8. Anordnung (10) nach einem der vorangehenden Ansprüche,
**dadurch gekennzeichnet, dass** die Schalldämpferanordnung (20) wenigstens eine mechanisch mit der Schalldämpferstruktur (34) verbundene Materiallage umfasst, wobei ein Gewicht der Materiallage höher als das Gewicht der Schalldämpferstruktur (34) ist.

9. Anordnung (10) nach einem der vorangehenden Ansprüche,
**dadurch gekennzeichnet, dass** die Schalldämpferstruktur (34) ein Metamaterial umfasst.

10. Anordnung (10) nach einem der vorangehenden Ansprüche,
**dadurch gekennzeichnet, dass** die Schalldämpferanordnung (20) einen ersten Bereich aufweist, der für eine Schalldämpfung in einem ersten Frequenzbereich ausgelegt ist, und wenigstens einen weiteren Bereich, der für eine Schalldämpfung in einem zweiten Frequenzbereich ausgelegt ist, der mit dem ersten Frequenzbereich nicht oder zumindest nicht vollständig überlappt.

11. Anordnung (10) nach einem der vorangehenden Ansprüche,
**dadurch gekennzeichnet, dass** der Spracherfassungsbereich (18) und die Schalldämpferstruktur (20) einander zumindest abschnittsweise überlappen.

12. Anordnung (10) nach einem der vorangehenden Ansprüche,
ferner umfassend einen Akustikausgabereich (16),
wobei in wenigstens einem ersten Betriebszustand der Spracherfassungsbereich (18) entlang einer Längsachse (L) betrachtet zwischen dem Akustikausgabereich (16) und wenigstens einem Abschnitt (28) der Schalldämpferanordnung (20) positioniert ist.

13. Anordnung (10) nach Anspruch 12,
**dadurch gekennzeichnet, dass** die Schalldämpferanordnung (20) gegenüber einem Gehäuse (17) der Anordnung (10), das den Spracherfassungsbereich (18) umfasst, derart verlagerbar ist, dass die Schalldämpferanordnung (20) in einem zweiten Betriebszustand in einem geringeren Ausmaß oder auch gar nicht entlang der Längsachse (L) von dem Gehäuse (17) hervorsteht als in dem ersten Betriebszustand.

14. Anordnung nach einem der vorangegangenen Ansprüche, **dadurch gekennzeichnet, dass** die Schalldämpferanordnung (20) eine der Person zugewandte Vorderseite (32), eine Rückseite (30) und eine Schalldämpferstruktur (34) aufweist, die sich zumindest teilweise zwischen der Vorderseite (32) und der Rückseite (30) erstreckt.

15. Schalldämpferanordnung (20), die wenigstens einen vibroakustischen Bereich aufweist und/oder die an einer einer Person zugewandten Vorderseite (32) zumindest bereichsweise eine faserige Oberflächentextur mit einer Vielzahl von hervorstehenden faserartigen Materialabschnitten aufweist,
für eine Anordnung (10) nach einem der vorangehenden Ansprüche.

## Claims

1. An arrangement for speech detection (10) positionable on or close to the head of a speaking person (100), comprising:
a speech detection region (18) comprising a microphone (19); and
a silencer arrangement (20) positionable in front of the mouth (104) of the person (100),
namely so:
- that the speech detection region (18) is, at least partly, arranged between the silencer arrangement (20) and the mouth (104); and/or
- that a space (50) between the mouth (104) and the speech detection region (18) is at least partly unblocked by the silencer arrangement (20),
**characterised in that**
the silencer arrangement (20) comprises at least one vibro-acoustic region and/or **in that** the silencer arrangement (20) has, at least in sections, a fibrous surface texture with a plurality of protruding fibrous material sections at a front (32) facing the person.

2. The arrangement (10) according to claim 1,
**characterised in that** the silencer arrangement (20) has a planar configuration.

3. The arrangement (10) according to claim 1 or 2,
**characterised in that** the silencer arrangement (20) has a length (D) of at least 5 cm and preferably at least 10 cm.

4. The arrangement (10) according to one of the preceding claims,
**characterised in that** the silencer arrangement (20) is at least in sections positionable in front of the mouth (104) of the person (100).

5. The arrangement (10) according to one of the preceding claims,
**characterised in that** the silencer arrangement (20) is configured to at least partly concentrate speech sound waves generated by the person (100) in a predetermined region.

6. The arrangement (10) according to one of the preceding claims,
**characterised in that** the silencer arrangement (20) comprises a region facing the person (100) which has an uneven surface and/or Helmholtz resonators and/or absorber wedges (210) and/or channels having an angled course.

7. The arrangement according to one of the preceding claims,
wherein the vibroacoustic region comprises a plurality of vibroacoustic elements (202) and the vibroacoustic elements (202) are respectively positioned in the region of a Helmholtz resonator or of a channel according to claim 6.

8. The arrangement (10) according to one of the preceding claims,
**characterised in that** the silencer arrangement (20) comprises at least one material layer mechanically connected to the silencer structure (34), wherein a weight of the material layer is higher than the weight the silencer structure (34).

9. The arrangement (10) according to one of the preceding claims,
**characterised in that** the silencer structure (34) comprises a metamaterial.

10. The arrangement (10) according to one of the preceding claims,
**characterised in that** the silencer arrangement (20) comprises a first region designed for sound attenuation in a first frequency range, and at least one further region designed for sound attenuation in a second frequency range which does not or at least not completely overlap the first frequency range.

11. The arrangement (10) according to one of the preceding claims,
**characterised in that** the speech detection region (18) and the silencer structure (20) overlap at least in sections.

12. The arrangement (10) according to one of the preceding claims,
further comprising an acoustic output region (16),
wherein, when regarded along a longitudinal axis (L), the speech detection region (18) is positioned between the acoustic output region (16) and at least a section (28) of the silencer arrangement (20) in at least a first operating state.

13. The arrangement (10) according to claim 12,
**characterised in that** the silencer arrangement (20) is displaceable relative to a housing (17) of the arrangement (10) comprising the speech detection region (18) so that, in a second operating state, the silencer arrangement (20) protrudes from the housing (17) along the longitudinal axis (L) to a lesser extent than in the first operating state or not at all.

14. The arrangement according to one of the preceding claims,
**characterised in that** the silencer arrangement (20) has a front (32) facing the person, a rear (30), and a silencer structure (34) at least part of which extends between the front (32) and the rear (30).

15. A silencer arrangement (20) comprising at least one vibro-acoustic region and/or having, at least in sections, a fibrous surface texture with a plurality of protruding fibrous material sections at a front (32) facing the person, for an arrangement (10) according to one of the preceding claims.

## Revendications

1. Dispositif d'enregistrement de voix (10) positionnable sur ou à proximité de la tête d'un orateur (100), avec :
une zone d'enregistrement de voix (18) comprenant un microphone (19) ; et un dispositif de sourdine (20) positionnable devant la bouche (104) de la personne (100),
de sorte que :
- la zone d'enregistrement de voix (18) soit disposée au moins en partie entre le dispositif de sourdine (20) et la bouche (104) ; et/ou
- un espace libre (50) entre la bouche (104) et la zone d'enregistrement de voix (18) soit au moins partiellement dégagée par le dispositif de sourdine (20),
**caractérisé en ce que**
le dispositif de sourdine (20) présente au moins une zone vibroacoustique et/ou le dispositif de sourdine (20) présente, sur une face avant (32) tournée vers la personne, au moins par endroit une texture de surface fibreuse avec une pluralité de sections de matériau saillantes fibreuses.

2. Dispositif (10) selon la revendication 1,
**caractérisé en ce que** le dispositif de sourdine (20) est conçu plat.

3. Dispositif (10) selon la revendication 1 ou 2,
**caractérisé en ce que** le dispositif de sourdine (20) présente une longueur (D) d'au moins 5 cm et préférentiellement au moins 10 cm.

4. Dispositif (10) selon l'une des revendications précédentes,
**caractérisé en ce que** le dispositif de sourdine (20) peut se positionner au moins par sections devant la bouche (104) de la personne (100).

5. Dispositif (10) selon l'une des revendications précédentes,
**caractérisé en ce que** le dispositif de sourdine (20) est conçu pour regrouper au moins partiellement des ondes sonores du langage produites par la personne (100) dans une zone prédéterminée.

6. Dispositif (10) selon l'une des revendications précédentes,
**caractérisé en ce que** le dispositif de sourdine (20) présente une zone tournée vers la personne (100) avec une surface inégale et/ou des résonateurs de Helmholtz et/ou des coins absorbants (210) et/ou des canaux avec des sections anguleuses.

7. Dispositif (10) selon l'une des revendications précédentes,
dans lequel la zone vibroacoustique présente une pluralité d'éléments vibroacoustiques (202) et les éléments vibroacoustiques (202) étant positionnés respectivement dans la zone d'un résonateur de Helmholtz ou d'un canal selon la revendication 6.

8. Dispositif (10) selon l'une des revendications précédentes,
**caractérisé en ce que** le dispositif de sourdine (20) comprend au moins une couche matérielle liée mécaniquement à la structure d'amortissement de son (34), où le poids d'une couche matérielle est supérieur au poids de la structure d'amortissement de son (34).

9. Dispositif (10) selon l'une des revendications précédentes,
**caractérisé en ce que** la structure d'amortissement de son (34) comprend un métamatériau.

10. Dispositif (10) selon l'une des revendications précédentes,
**caractérisé en ce que** le dispositif de sourdine (20) présente une première zone conçue pour amortir le son dans une première gamme de fréquences, et au moins une autre zone conçue pour amortir le son dans une seconde gamme de fréquences qui ne se superpose pas ou au moins ne se superpose pas complètement avec la première gamme de fréquences.

11. Dispositif (10) selon l'une des revendications précédentes,
**caractérisé en ce que** la zone d'enregistrement de voix (18) et la structure de sourdine (20) se superposent au moins par sections.

12. Dispositif (10) selon l'une des revendications précédentes,
comprenant en outre une zone de sortie acoustique (16),
où dans au moins un premier mode de fonctionnement, la zone d'enregistrement de voix (18) est positionnée le long d'un axe longitudinal (L) considéré entre la zone de sortie acoustique (16) et au moins une section (28) du dispositif de sourdine (20).

13. Dispositif (10) selon la revendication 12,
**caractérisé en ce que** le dispositif de sourdine (20) peut être disposé en face d'un boîtier (17) du dispositif (10) contenant la zone d'enregistrement de voix (18), de sorte que le dispositif de sourdine (20), dans un second mode de fonctionnement, dépasse moins ou même pas du tout du boîtier (17) le long de l'axe longitudinal (L) par rapport au premier mode de fonctionnement.

14. Dispositif selon l'une des revendications précédentes, **caractérisé en ce que** le dispositif de sourdine (20) présente une face avant tournée vers la personne (32), une face arrière (30) et une structure d'amortissement de son (34) qui s'étend au moins partiellement entre la face avant (32) et la face arrière (30).

15. Dispositif de sourdine (20) présentant au moins une zone vibroacoustique et/ou présentant sur une face avant (32) tournée vers la personne, au moins par endroit une texture de surface fibreuse avec une pluralité de sections de matériau saillantes fibreuses, pour un dispositif (10) selon l'une des revendications précédentes.
